(19) **Europäisches Patentamt / European Patent Office / Office européen des brevets**

(11) **EP 4 615 139 A1**

(12) **EUROPEAN PATENT APPLICATION**
published in accordance with Art. 153(4) EPC

(43) Date of publication:
**10.09.2025 Bulletin 2025/37**

(21) Application number: **23886348.4**

(22) Date of filing: **03.11.2023**

(51) International Patent Classification (IPC):
*H04W 74/08* (2024.01)   *H04W 24/08* (2009.01)
*H04W 76/19* (2018.01)   *H04W 92/18* (2009.01)

(52) Cooperative Patent Classification (CPC):
**H04W 24/08; H04W 72/02; H04W 72/0457;**
**H04W 74/08; H04W 76/19; H04W 92/18**

(86) International application number:
**PCT/KR2023/017467**

(87) International publication number:
**WO 2024/096654 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **03.11.2022  KR 20220145263**

(71) Applicant: **Innovative Technology Lab Co., Ltd.**
**Seocho-gu, Seoul 06744 (KR)**

(72) Inventors:
• **LEE, Won Seok**
  **Seoul 06744 (KR)**
• **PARK, Dong Hyun**
  **Seoul 06744 (KR)**

(74) Representative: **Diehl & Partner**
**Patent- und Rechtsanwaltskanzlei mbB**
**Erika-Mann-Straße 9**
**80636 München (DE)**

(54) **METHOD AND DEVICE FOR PERFORMING SIDELINK COMMUNICATION ON BASIS OF LBT PROCEDURE IN UNLICENSED BAND**

(57)    A wireless user equipment (UE) that performs a listen before talk (LBT) operation in a sidelink unlicensed band in a wireless communication system may be configured to select a resource pool and a resource for sidelink communication based on a resource pool and resource selection procedure, to perform an LBT procedure using the resource pool and the resource selected based on the sidelink unlicensed band, to verify a consistent LBT failure trigger status based on the LBT procedure, and to select the resource for the sidelink communication based on a transmission resource selection procedure when the consistent LBT failure is triggered.

Fig. 30

EP 4 615 139 A1

**Description**

TECHNICAL FIELD

The present disclosure relates to a method and device for performing sidelink communication based on a listen before talk (LBT) procedure in an unlicensed band of a wireless communication system. More particularly, the present disclosure relates to a method and device for performing sidelink communication based on consistent LBT failure.

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Also, Vehicle-to-everything (V2X) communication, a communication method of exchanging or sharing road infrastructures during driving and information, such as traffic conditions, through communication with other vehicles, may be considered. V2X may include, for example, vehicle-to-vehicle (V2V), which may refer to a long term evolution (LTE)-based/New Radio (NR) based communication between vehicles, vehicle-to-pedestrian (V2P), which may refer to LTE-based/NR-based communication between a vehicle and a user equipment (UE) carried by a user, and a vehicle-to-infrastructure/network (V2I/N), which may refer to a LTE-based/NR-based communication between a vehicle and a roadside unit (RSU)/network. The RSU may be a transportation infrastructure entity configured by a base station or a fixed UE, such as, an entity that transmits a speed notification to a vehicle.

DETAILED DESCRIPTION

TECHNICAL SUBJECT

A technical subject of the present disclosure relates to a method and device for performing sidelink (SL) communication in a wireless communication system.

A technical subject of the present disclosure relates to a method and device for performing sidelink communication based on a listen before talk (LBT) procedure in an unlicensed band of a wireless communication system.

A technical subject of the present disclosure relates to a method and device for performing sidelink communication based on consistent LBT failure in an unlicensed band of a wireless communication system.

A technical subject of the present disclosure relates to a method and device for performing sidelink communication based on a consistent LBT failure detection unit.

Technical subjects to be achieved by the present disclosure are not limited to the aforementioned technical subjects and still other technical subjects not described may be clearly understood by one of ordinary skill in the art to which the present disclosure pertains from the following description.

TECHNICAL SOLUTION

According to an aspect of the present disclosure, there is provided a wireless user equipment (UE) that performs a listen before talk (LBT) operation in a sidelink unlicensed band in a wireless communication system, the wireless UE including at least one antenna configured to transmit and receive one or more wireless signals; at least one processor; and a memory configured to store instructions for the wireless UE when executed by the at least one processor, wherein the wireless UE is configured to select a resource pool and a resource for sidelink communication based on a resource pool and resource selection procedure, to perform a listen before talk (LBT) procedure using the resource pool and the resource selected based on the sidelink unlicensed band, to verify a consistent LBT failure trigger status based on the LBT procedure, and to select the resource for the sidelink communication based on a transmission resource selection procedure when the consistent LBT failure is triggered.

Also, according to an aspect of the present disclosure, the consistent LBT failure trigger status may be verified per resource block (RB) set, and the resource pool includes a plurality of RB sets, and when the consistent LBT failure is triggered in a first RB set among the plurality of RB sets included in the resource pool and the consistent LBT failure is not triggered in a second RB set among the plurality of RB sets included in the resource pool, the wireless UE may perform the resource selection procedure in the second RB set and may select the resource for the sidelink communication.

Also, according to an aspect of the present disclosure, when the consistent LBT failure is triggered in the first RB set and the consistent LBT failure is not triggered in the second RB set, a medium access control (MAC) layer of the wireless UE may release a sidelink grant selected based on the resource selection procedure and may select the resource for the sidelink communication included in the second RB set.

Also, according to an aspect of the present disclosure, when the consistent LBT failure is triggered in the first RB set and the consistent LBT failure is not triggered in the second RB set, a MAC layer of the wireless UE may deliver consistent LBT failure information to a physical layer of the wireless UE, the physical layer of the wireless UE may determine a candidate resource set based on the consistent LBT failure information and deliver the same to the MAC layer of the wireless UE, and the MAC layer of the wireless UE may select at least one resource in the candidate resource set as the resource for the sidelink communication.

Also, according to an aspect of the present disclosure, the consistent LBT failure trigger status may be verified per resource pool, a single sidelink bandwidth part (SL BWP) may include a plurality of resource pools, and when the consistent LBT failure is triggered in a first resource pool among the plurality of resource pools included in the SL BWP and the consistent LBT failure is not triggered in a second resource pool among the plurality of resource pools included in the SL BWP, the wireless UE may select the second resource pool based on the resource pool and resource selection procedure, and may perform a resource selection procedure in the second resource pool and select the resource for the sidelink communication.

Also, according to an aspect of the present disclosure, when the consistent LBT failure is triggered in all of the plurality of resource pools included in the SL BWP, the wireless UE may release connection with another wireless UE based on sidelink radio link failure (SL RLF).

Also, according to an aspect of the present disclosure, consistent LBT failure reporting may be performed through an SL LBT failure medium access control (MAC) control element (CE), and each C field of the SL LBT failure MAC CE may be configured based on a consistent LBT failure reporting unit.

EFFECT

According to the present disclosure, it is possible to provide a method and device of performing sidelink (SL) communication in a wireless communication system.

According to the present disclosure, it relates to a method and device for performing sidelink communication based on a listen before talk (LBT) procedure in an unlicensed band of a wireless communication system.

According to the present disclosure, it relates to a method and device for performing sidelink communication based on consistent LBT failure in an unlicensed band of a wireless communication system.

According to the present disclosure, it relates to a method and device for performing sidelink communication based on a consistent LBT failure detection unit.

Effects to be achieved by the present disclosure are not limited to the aforementioned effects and still other technical effects not described may be clearly understood by one of ordinary skill in the art to which the present disclosure pertains from the following description.

BRIEF DESCRIPTION OF DRAWINGS

FIG. 1 illustrates an example of describing a new radio (NR) frame structure to which the present disclosure may apply.
FIG. 2 illustrates an NR resource structure to which the present disclosure may apply.
FIG. 3 illustrates an NR sidelink slot structure to which the present disclosure may apply.
FIG. 4 illustrates an NR sidelink frequency to which the present disclosure may apply.
FIG. 5 illustrates an NR sidelink resource pool configuration to which the present disclosure may apply.
FIG. 6 illustrates an unlicensed band for each region for NR sidelink communication to which the present disclosure may apply.
FIG. 7 illustrates use of a 5 gigahertz (GHz) unlicensed band to which the present disclosure may apply.
FIG. 8 illustrates a method of increasing a bandwidth in consideration of a power spectral density (PSD) limitation to which the present disclosure may apply.
FIG. 9 illustrates a method of configuring a guard band in consideration of a shared band within an intra-cell to which the present disclosure may apply.

FIG. 10 illustrates an unlicensed band applicable to the present disclosure.

FIG. 11 illustrates a sidelink resource pool to which the present disclosure may apply.

FIG. 12 illustrates a sidelink discontinuous reception (DRX) hybrid automatic repeat and request (HARQ) round trip time (RTT) timer applied to the present disclosure.

FIG. 13 illustrates a method of operating a sidelink timer in a resource pool in which a physical sidelink feedback channel (PSFCH) is not configured, applied to the present disclosure.

FIG. 14 illustrates a sidelink HARQ feedback operation, applied to the present disclosure.

FIG. 15 illustrates physical sidelink shared channel (PSSCH)-PSFCH mapping for HARQ feedback transmission, applied to the present disclosure.

FIG. 16 illustrates a channel occupancy time (COT) structure applied to the present disclosure.

FIG. 17 illustrates a method of detecting consistent LBT failure, applied to the present disclosure.

FIG. 18 illustrates a LBT failure medium access control (MAC) control element (CE) applied to the present disclosure.

FIG. 19 illustrates an RB set-based consistent LBT failure detection method, applied to the present disclosure.

FIG. 20 illustrates a method for a MAC layer of a user equipment (UE) to select a resource within a resource pool based on consistent LBT failure, applied to the present disclosure.

FIG. 21 is a flowchart illustrating a method of detecting consistent LBT failure on an RB set basis, applied to the present disclosure.

FIG. 22 illustrates a method of determining a candidate resource set based on consistent LBT failure, applied to the present disclosure.

FIG. 23 illustrates a case in which consistent LBT failure is performed on a resource pool basis, applied to the present disclosure.

FIG. 24 illustrates a resource pool selection operation, applied to the present disclosure.

FIG. 25 illustrates a method of detecting consistent LBT failure on a resource pool basis, applied to the present disclosure.

FIG. 26 illustrates an SL LBT failure MAC CE, applied to the present disclosure.

FIG. 27 illustrates an SL LBT failure MAC CE considering an SL carrier aggregation, applied to the present disclosure.

FIG. 28 illustrates an SL LBT failure MAC CE reporting operation, applied to the present disclosure.

FIG. 29 illustrates a method of transmitting an SL LBT failure MAC CE, applied to the present disclosure.

FIG. 30 is a flowchart illustrating a method of performing sidelink communication based on consistent LBT failure, applied to the present disclosure.

FIG. 31 is a diagram illustrating a base station device and a terminal device to which the present disclosure may apply.

BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

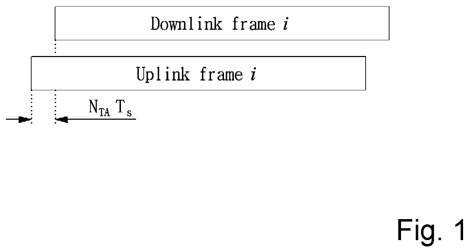

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k = T_s/T_c = 64$.

Referring to FIG. 1, a time structure of a frame for a downlink/uplink (DL/UL) transmission may include $T_f = (\Delta f_{max} N_f/100) \cdot T_s = 10ms$. Here, a single frame may include 10 subframes corresponding to $T_{sf} = (\Delta f_{max} N_f/1000) \cdot T_s = 1ms$. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0 to 4 subframes and 5 to 9 subframes. Here, the half frame 1 may include 0 to 4 subframes and the half frame 2 may include 5 to 9 subframes.

The $N_{TA}$ represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = (N_{TA} + N_{TA,offset})T_c$$

The $N_{TA,offset}$ denotes a TA offset value occurring due to a duplex mode difference and the like. Basically, in a frequency division duplex (FDD), $N_{TA,offset} = 0$. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6 GHz or less frequency, $N_{TA,offset}$ may be $39936T_C$ or $25600T_C$. $39936T_C = 20.327\mu s$ and $25600T_C = 13.030\mu s$. Also, in FR2 (Frequency Range 2) which is millimeter wave (mmWave), the $N_{TA,offset}$ may be

$13792T_C$. At this time, $13792T = 7.020$ μs.

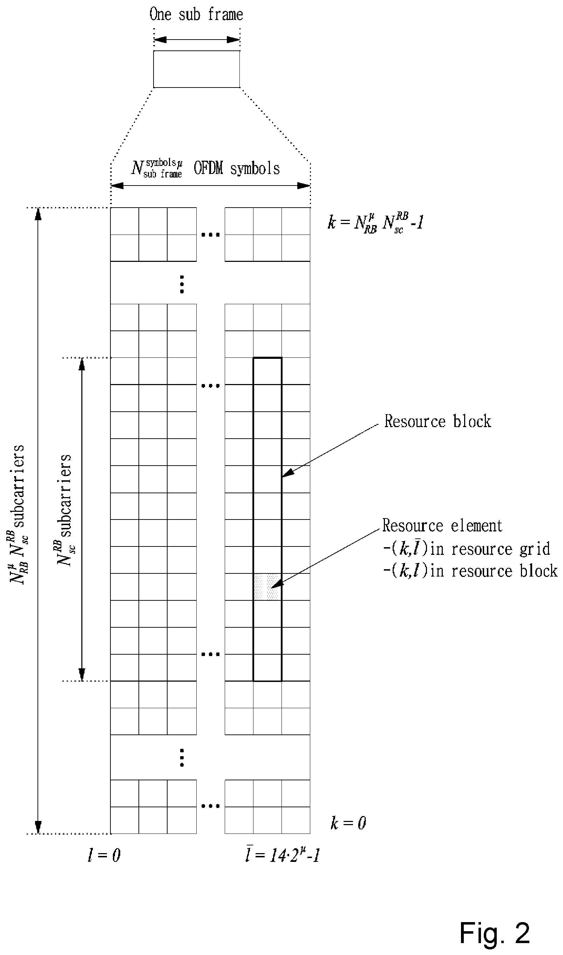

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, the $N^{RB}_{sc}$ represents the number of subcarriers per one RB and k represents the subcarrier index.

[Equation 2]

$$n_{PRB} = \left\lfloor \frac{k}{N^{RB}_{sc}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu = 2$ and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu$ = 1 and 2 may be used in the unlicensed band of 6 GHz or less and an SCS corresponding to $\mu$ = 3 and 4 may be used in the unlicensed band above 6 GHz. Here, for example, if $\mu$ = 4, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480 kHz may not be considered in Table 4, the present disclosure is not limited to such examples.

[Table 4]

| SCS | slots in 10ms | slots in 10ms | symbols in 10 ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |
| 480 kHz | 320 | N/A | 4480 |

The V2X service may support a set of basic requirements for V2X services. The requirements are designed basically in sufficient consideration of a road safety service. Here, V2X UE may exchange autonomous status information through a SL. Also, the V2X UE may exchange the information with infrastructure nodes and/or pedestrians.

The V2X service (e.g., LTE Rel-15) may support at least one of a carrier aggregation in a SL, a high order modulation, a latency reduction, a transmit (Tx) diversity, and a sTTI (Transmission Time Interval). For this purpose, new features may be applied to the V2X communication. More particularly, the V2X UE may operate in consideration of coexistence with other V2X UEs. For example, the V2X UE may use the same resource pool as other V2X UEs.

For example, the technical features may be classified largely based on four categories as represented by the following Table 5 by considering the use cases for supporting a V2X service as the system aspect (SA) 1, but are not limited thereto. In Table 5, the "Vehicles Platooning" may be the technology that enables a plurality of vehicles to dynamically form a group and similarly operate. The "Extended Sensors" may be the technology that enables an exchange of data gathered from sensors or video images. The "Advanced Driving" may be the technology that enables a vehicle to drive based on semi-automation or full-automation. The "Remote Driving" may be the technology for remotely controlling a vehicle and the technology for providing an application. Based thereon, further description related thereto may be given by the following Table 5.

[Table 5]

| **Vehicles Platooning** |
|---|
| Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| **Extended Sensor** |
| Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |
| **Advanced Driving** |
| Advanced Driving enables semi-automated or full-automated driving. Each vehicle and/or RSU shares its own perception data obtained from its local sensors with vehicles in proximity and that allows vehicles to synchronize and coordinate their trajectories or manoeuvres. Each vehicle shares its driving intention with vehicles in proximity too. |
| **Remote Driving** |
| Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is included but not limited to the following examples. That is, in the LTE V2X system, the present disclosure may apply to an interactable portion.

Here, NR V2X capability may not be limited to essentially supporting only V2X services and V2X RAT to be used may be selected.

Also, new service requirements for Public Safety and commercial use case for NR V2X services may be considered further in. For example, the use case may include, but is not limited to, at least one of more advanced V2X services, public safety services, the Network Controlled Interactive Service (NCIS), the Gap Analysis for Railways (MONASTERYEND), the Enhanced Relays for Energy Efficiency and Extensive Coverage (REFEC), and the Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. The V2X UEs may exchange data and control information (e.g., 2nd SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information (1st SL Control Information (SCI)) including 2nd SCI indication. That is, a V2X UE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive the HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A UE may transmit SCI to another UE via PSCCH. Here, the Tx UE may transmit the first SCI (1st SCI, SCI format 1-A) to the Rx UE via PSCCH. The 1st SCI may be used for scheduling the PSSCH and the secondary SCI (2nd SCI) within the PSSCH, and the 1st SCI may contain priority information, time/frequency resource allocation information, resource reservation information, Demodulation Reference Signal (DMRS) pattern information, 2nd SCI format indicator information, 2nd beta-offset indicator information as a parameter for the SCI and PSSCH rate matching operation, DMRS port count information, Modulation Coding Scheme (MCS) information, additional MCS table indicator information (e.g., indicating one of the 64 QAM, or 256 OAM or URLLC MCS table), PSFCH overhead indicator information (a parameter for PSSCH rate matching operation with 2nd SCI), and at least one of the reserved bits.

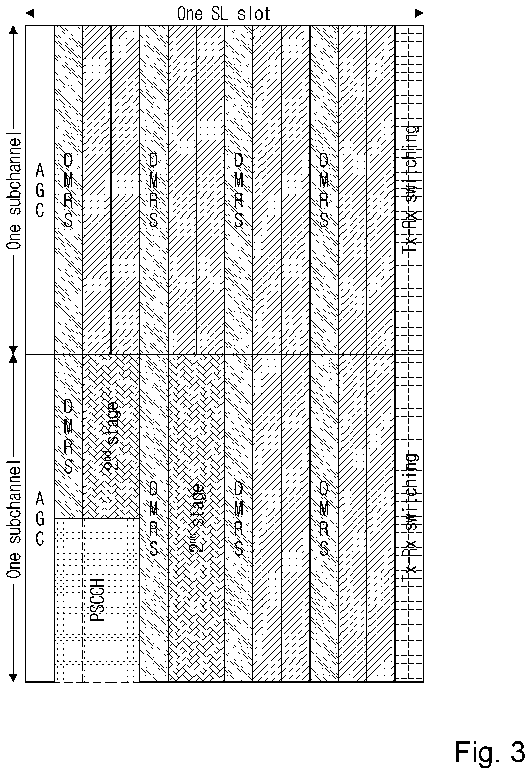

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to the remaining OFDM symbols excluding the AGC symbol and the Tx-Rx switching symbol. In detail, locations of the PSCCH (1st SCI), the 2nd SCI, PSSCH (Data), and the DMRS for demodulation may be the same as in FIG. 3, but are not limited thereto. For example, in FIG. 3, the PSCCH and the 2nd SCI are present in the first subchannel and the PSSCH and the DMRS may be allocated considering this. As another example, the second subchannel refers to a subchannel in which the PSCCH and the 2nd SCI are absent and the PSSCH and the DMRS may be allocated as in FIG. 3.

Here, the number of PSSCH DMRSs may be configured according to a higher layer configuration and one or more PSSCH DMRSs may be configured according to a channel environment of the UE. A PSCCH (1st SCI) receives a demodulation using a DMRS of PSCCH (i.e., PSCCH DMRS) and is equally allocated and transmitted to every four resource elements (REs) within a single resource block (RB). On the contrary, the 2nd SCI is decoded using the PSSCH DMRS.

Also, for example, a single resource pool associated with an NR SL may support the frequency division multiplexing (FDM), the time division multiplexing (TDM), and the spatial divisional multiplexing (SDM). This means that each resource in a single resource pool can be divided and used based on the frequency, the time, and the space, which can increase the resource efficiency.

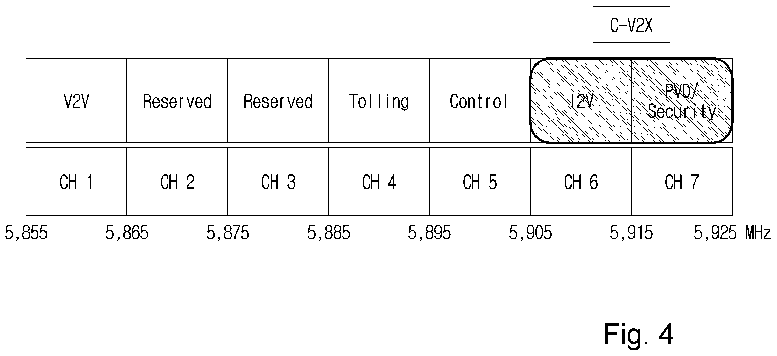

FIG. 4 illustrates an NR SL frequency to which the present disclosure may apply. For example, the NR SL may operate based on at least one of Frequency Range 1 (FR1) (sub 6 GHz) and Frequency Range 2 (FR2) (i.e., up to 52.6 GHz), the unlicensed ITS bands, and the licensed band. In detail, for example, referring to FIG. 4, 5,855 to 5,925 MHz may be allocated for an ITS service (technology neutral manner).

Also, the NR V2X quality of service (QoS) requirements may be considered. That is, the delay, the reliability, and a data rate may need to be satisfied with predetermined conditions related to the requirements for an NR V2X service. Here, the requirements may be configured as in Table 6 below and Table 7 may show the PC5 QoS for NR V2X.

Here, to satisfy the QoS requirements, the access stratum (AS) level QoS management may be required. To this end, a HARQ and CSI feedback associated with a link adaptation may be required. Also, each of the NR V2X UEs may have a different maximum bandwidth capability (max. BW capability). Considering this, AS level information that includes at least one of UE capability, QoS related information, a radio bearer configuration, and a physical layer configuration may be exchanged between the NR V2X UEs.

[Table 6]

| |
| --- |
| - Delay:[3, 100ms]<br>- Reliability :[90%, 99.999%]<br>- Data rate: up to 1Gbps (TS22.186) |

[Table 7]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 1 | GBR (NOTE 1) | 3 | 20 ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative ex-change-low degree of auto-mation; Platooning-information shar-ing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |
| 82 | Delay Critical GBR (NOTE 1) | 3 | 10 ms | $10^{-4}$ | 2000 by-tes | 2000 ms | Cooperative collision avoidance; Sensor sharing-Higher degree of automation; Video sharing-higher degree of automation |
| 83 | | 2 | 3 ms | $10^{-5}$ | 2000 by-tes | 2000 ms | Emergency trajectory alignment; Sensor sharing-Higher degree of automation |
| •NOTE 1: GBR and Delay Critical GBR PQIs can only be used for unicast PC5 communications. Editor's note: It is FFS if GBR and Delay Critical GBR can also be used for broadcast and groupcast. | | | | | | | |
| • NOTE 1: For standardized PQI to QoS characteristics mapping, the table will be extended/updated to support service requirements for other identified V2X services. • NOTE 2: The PQIs may be used for other services than V2X. | | | | | | | |

Hereinafter, an SL HARQ procedure is described. Whether the V2X UE is to report a HARQ feedback is indicated by a higher layer (e.g., RRC) configuration and SCI signaling (e.g., 2nd SCI). For example, if the V2X UE performs SL communication based on a groupcast, whether to report the HARQ feedback may be determined based on a distance between a Tx UE and a Rx UE.

When the V2X UE performs at least one of unicast and groupcast transmission, the SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit a HARQ feedback may be determined based on a physical distance between the Tx UE and the Rx UE. Here, when the HARQ feedback is performed for the groupcast transmission via a PSSCH, the Rx UE may send a negative response only when the received PSSCH decoding fails. It may be called an option 1 operation. Moreover, when the HARQ feedback is performed for the groupcast transmission via a PSSCH, the Rx UE may send a positive response or a negative response based on whether a PSSCH decoding succeeds and it may be called an option 2 operation. In the option 1 operation of feeding back only a negative response as a NACK only HARQ feedback, if the physical distance between the Tx UE and the Rx UE is less than or equal to the communication range requirements, a HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx UE is indicated to the Rx UE through SCI signaling associated with the PSSCH. The Rx UE may estimate a distance from the Tx UE based on both pieces of information included in the received SCI and its location information and may operate as above.

Also, when a unicast communication is performed based on the V2X, a case in which an SL HARQ feedback is enabled may be considered. The Rx UE may generate and transmit a HARQ ACK/NACK corresponding to the PSSCH depending on whether the decoding of a corresponding transport block (TB) succeeds.

Then, an NR SL resource allocation mode refers to a mode in which a base station schedules an SL transmission resource. Here, a mode in which the base station schedules an SL transmission resource may be mode 1. For example, when the V2X UE is located within the base station coverage, the V2X UE may receive SL resource information from the base station. On the contrary, there is a mode in which the V2X UE directly determines a resource for SL transmission on either an SL resource configured by the base station/network or a pre-configured SL resource. Here, a mode in which the UE directly determines an SL transmission resource may be mode 2.

Also, numerology and waveform for sidelink may be considered, which may be as shown in Table 8 below. In detail, regarding PSSCH/PSCCH and PSFCH in a sidelink, SCS and CP lengths supported in each of FR1 and FR2 may be as shown in Table 8 below. Here, the waveform may support only OFDM without supporting DFT-S-OFDM, but may not be limited thereto. A sidelink-synchronization signal block (SL-SSB) may be defined independently for each frequency range, which may be similar to NR-Uu.

[Table 8]

|  | FR 1 | FR 2 |
|---|---|---|
| PSSCH/PSCCH and PSFCH | - Normal CP for 15 kHz, 30 kHz, 60 kHz<br>- Extended CP for 60 kHz | - Normal CP for 60 kHz, 120 kHz,<br>- Extended CP for 60 kHz |
| note | No support of DFT-S-OFDM for NR SL in Rel-16 | |

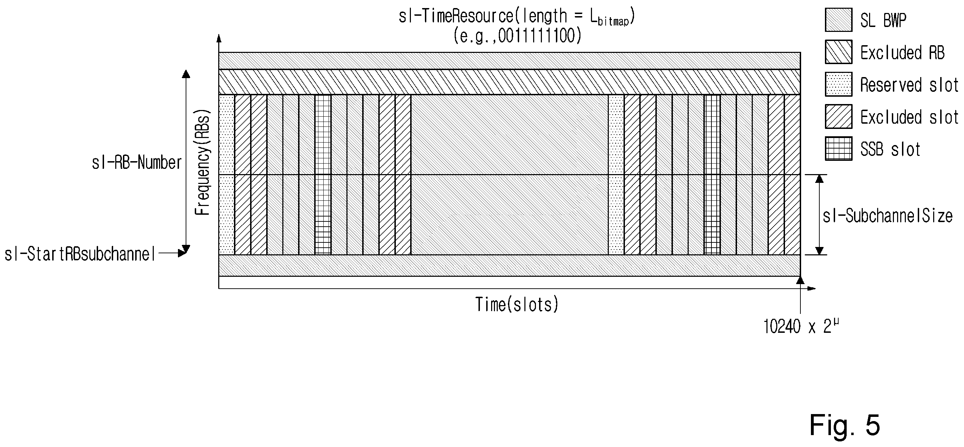

FIG. 5 illustrates an NR sidelink (SL) resource pool configuration. Referring to FIG. 5, a resource pool may represent resources in a time and a frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in an NR sidelink, at least one of a resource pool time period, a sidelink slot set (sl-TimeResource (length = $L_{bitmap}$)) within a single resource pool application period, and a first symbol and the number of consecutive symbols for a set of consecutive symbols within a single slot may be configured. As frequency resources, at least one of a bandwidth of at least one subchannel (e.g., sl-SubchannelSize = {10, 15, 20, 25, 50, 75 and 100} RBs), the entire bandwidth of the resource pool indicated by the number of consecutive subchannels (set of consecutive subchannels (e.g., sl-NumSubchannel = {1 to 27})), and a location in the frequency domain of a first subchannel of the resource pool (sl-StartRBsubchannel={0 to 265}) may be configured. For example, resources in the time domain and the frequency domain may be configured based on higher layer parameters. In FIG. 5, a frequency resource corresponding to an excluded resource block (RB) may represent some remaining RBs if total available RB resources do not exactly match a subchannel size (i.e., if it does not reach the number of RBs constituting a single subchannel). Here, the corresponding resources may not be used in the NR sidelink. Also, for example, a reserved slot may indicate a remaining slot in a situation in which a multiple unit of a length of a bitmap (e.g., sl-TimeResource) on a time resources is not established and may not be used as NR sidelink resources.

Next, a case in which an unlicensed band (unlicensed spectrum) is used for communication between a base station and a UE may be considered. For example, a communication scheme based on the unlicensed band may be a scheme of occupying a channel through competition and performing communication based on the occupied channel. The unlicensed band-based communication may be performed even for communication between the base station and the UE. In the following, described is an operation based on a case in which the unlicensed band is used for the sidelink communication. That is, the unlicensed band may be used even for sidelink communication that is communication between UEs. Also, the sidelink resource pool needs to be configured in consideration of using the sidelink unlicensed band. In more detail, the sidelink communication may be performed based on the resource pool. In the case of performing communication through the unlicensed band, the resource pool configuration needs to be differently configured.

For example, the resource pool of the sidelink communication may be configured based on a slot unit and a symbol that may be used for sidelink within a slot may be determined, which is the same as shown in FIG. 5. Also, as described above with FIG. 5, in the frequency domain, it may be configured based on the number of consecutive subchannels. The aforementioned sidelink resource pool configuration may be configured in consideration of unlicensed band communication, which is described below.

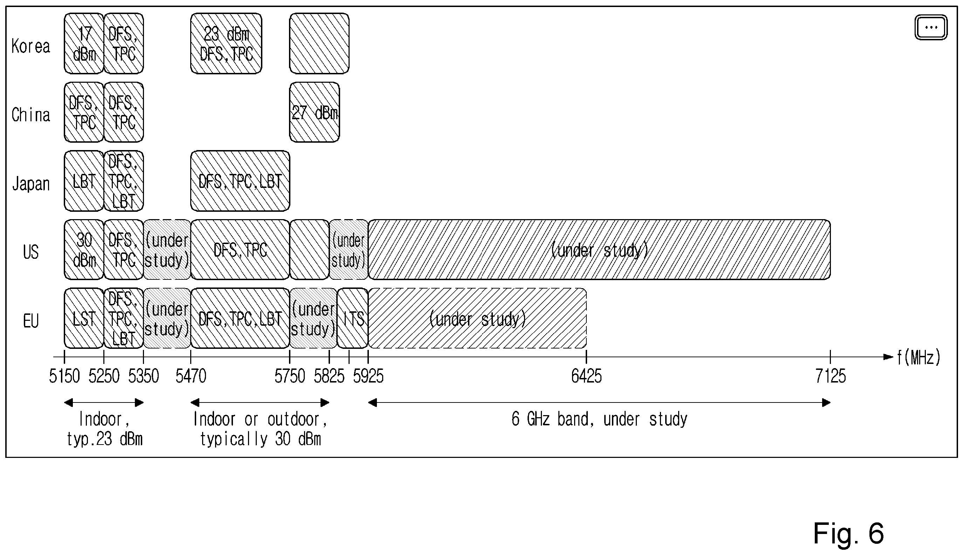

FIG. 6 illustrates an unlicensed band for each region for NR sidelink communication to which the present disclosure may apply. In Table 8 above, the frequency range of NR FR1 may be from 450 MHz to 6 GHz, but the corresponding frequency range may change from 450 MHz to 7.125 GHz. The frequency range of NR FR1 may be changed for the unlicensed band of 6 GHz band, but may not be limited thereto.

For example, the unlicensed band may be located below 1 GHz, 2.4 GHz, 5 GHz, 6 GHz, 37 GHz (USA only), and 60 GHz, but may not be limited thereto. Here, referring to FIG. 6, for example, in the system, 5 GHz band may be band 46 that is defined as 5150 to 5925 MHz. Also, for example, for LAA operation, band 49 (3550-3700 MHz) may be defined as a citizens broadband radio service (CBRS), but may not be limited thereto.

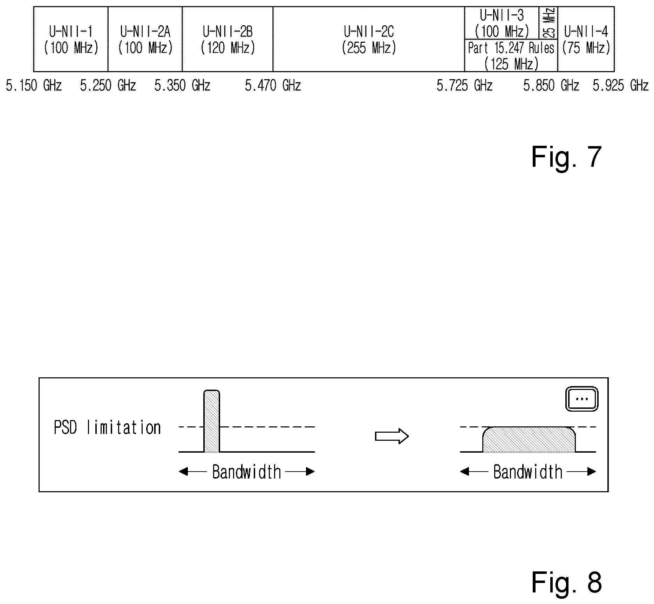

FIG. 7 illustrates use of a 5 GHz unlicensed band to which the present disclosure may apply. Referring to FIG. 7, each band within the 5 GHz unlicensed band may be set and, based thereon, use of the unlicensed band may be set. For example, it may be divided into 20 MHz units and each 20 MHz may be a single channel.

Here, the low frequency band of 5150 to 5350 MHz within the aforementioned band is specified in most regions to have the maximum transmit power of 23 dBm for indoor use. Also, in the band of 5470 MHz or more, it is used in a region with transmit power of up to 30 dBm and outdoor use in most areas. Here, for example, additional requirements may be present in some regions, given as effective isotropic radiated power (EIRP) values based on Table 9 below, along with limitation of the maximum transmit power.

[Table 9]

| Power spectral density, maximum channel occupancy time, minimum occupied bandwidth and dynamic frequency selection, transmit power control and LBT |
| --- |

Here, power spectral density (PSD) may indicate that the device is limited to performing full power transmission within a reference bandwidth. As a detailed example, European regulations may limit the PSD to 10 dBm/MHz. Therefore, in non-20MHz bandwidths, the device may not perform transmission at the maximum transmit power of 23 dBm.

FIG. 8 illustrates a method of increasing a bandwidth in consideration of a PSD limitation to which the present disclosure may apply. For example, as in FIG. 8 a case of small data transmission that requires only a small bandwidth may be considered. Here, in the case of performing small data transmission through a wide bandwidth, coverage may be expanded. Also, minimum bandwidth occupancy regulation may be satisfied with transmission through the wide bandwidth. Considering this, a method of performing transmission in the wide bandwidth may be preferred for small data.

Also, for example, in the case of occupying a channel through a channel access procedure in the unlicensed band, a maximum channel occupancy time (COT) corresponding to an occupancy-allowable maximum time may be differently set for each region. For example, Japan allows the maximum COT of up to 4 ms, while Europe allows the maximum COT of up to 8 ms or 10 ms. However, it is only an example and is not limited to the aforementioned embodiment. Also, for example, Europe may support frame base equipment (FBE) and load base equipment (LBE) rules. Here, FBE may be set to High Performance Radio (LAN HiperLAN)/2, and LBE may be adopted and applied from Wi-Fi standard specification and both may be supported in NR as a new communication system.

Also, for example, the minimum occupied bandwidth may be a bandwidth regulation that needs to be minimally occupied when a channel access is successful once. For example, the minimum occupied bandwidth regulation may be configured to occupy a nominal channel BW of 80 to 90% or more. As a detailed example, when the UE transmits a PUSCH to the base station in an unlicensed band, resources for the PUSCH may be requested to be allocated in an interlaced form in a specific bandwidth, but may not be limited to the corresponding embodiment.

Also, a regulation for dynamic frequency selection may be a regulation that limits bandwidth use for the purpose of protecting a system (e.g., radio) having high priority for use of the unlicensed band. Also, a transmit power control regulation may be a regulation that limits transmit power much lower than an allowed maximum transmit power value to be used. Also, a listen before talk (LBT) regulation may be a regulation for a channel access procedure, and Europe may support FBE and LBE rules. Here, FBE may be Hiperlan/2, and LBE may be adopted and applied from Wi-Fi standard specification and both may be supported in NR.

Also, for example, the 5 GHz unlicensed band may be used based on the aforementioned description, but, use of the 6 GHz band is under discussion in every country and institution. Here, the 6 GHz band may be a band that is not used in a mobile system, which differs from the 5 GHz. That is, different from the 5 GHz band shared in a plurality of mobile communication systems, the 6 GHz band may be used for a single specified communication system. Therefore, problems or inefficiency arising due to coexistence of different systems may be reduced.

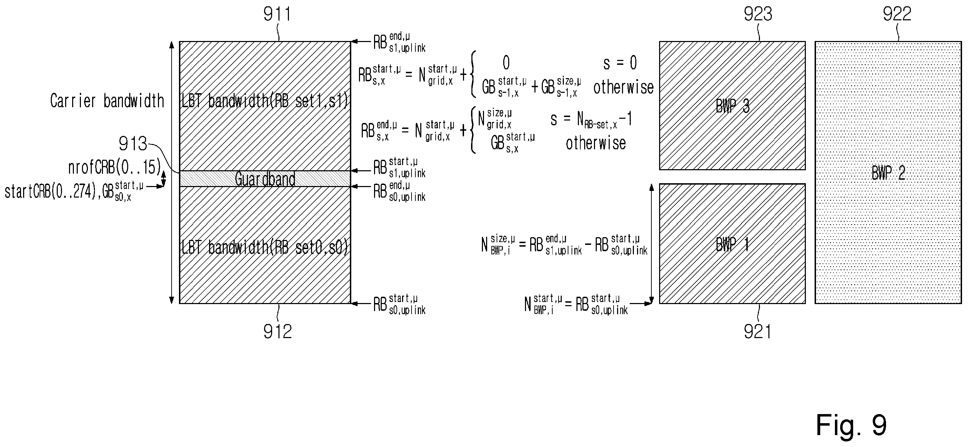

FIG. 9 illustrates a method of configuring a guard band in consideration of a shared band (e.g., unlicensed band) within an intra-cell to which the present disclosure may apply.

Referring to FIG. 9, to support a wideband operation in a shared spectrum access, a UE may receive IntraCellGuardBandsPerSCS parameter for each of an UL carrier and a DL carrier from a base station based on base station configuration. The UE may be provided with intra-cell guard bands of $N_{\text{RB-set,x}}$ - 1 in a single carrier (subcarrier spacing index=$\mu$). Referring to FIG. 9, the UE may receive higher layer signaling for a start common resource block (CRB) and the number of CRBs for each guard band. For example, the CRB may be a resource block defined/configured based on a point A that is a start location of a transmission bandwidth in a carrier in the frequency domain. The UE may verify information on the point A through base station signaling and, based thereon, may recognize a CRB location in frequency.

Here, each guard band may be defined based on $GB_{s,x}^{\text{start},\mu}$ parameter as the start CRB and, in each guard band, the size of the number of CRBs may be defined based on $GB_{s,x}^{\text{size},\mu}$ parameter. The UE may receive the aforementioned information through higher layer signaling based on each of startCRB and nrofCRBs parameters. Here, $s \in \{0,1, ..., N_{\text{RB-set,x}} - 2\}$, $N_{\text{RB-set,x}}$ denotes the number of RB sets, and x may be configured as DL or UL for downlink and uplink. $N_{\text{RB-set,x}}$ RB sets may be configured as a resource block set (RBS) within a single carrier through a guard band configuration. For example, the guard band may be configured based on IntraCellGuardBandsPerSCS parameter and the RBS may be configured within a single carrier accordingly.

Here, each RBS frequency bandwidth may correspond to an LBT frequency bandwidth. That is, each RBS may be set as a bandwidth corresponding to an LBT procedure performed through the base station and the UE. For example, in FIG. 9, if LBT succeeds in a correspondence area corresponding to the LBT bandwidth, an RB set 1 911 and an RB set 2 922 may occupy a corresponding band and may perform communication. That is, the RBS may correspond to the LBT bandwidth. For example, a Tx node (e.g., gNB or UE) may determine channel occupancy for the unlicensed band through an LBT channel access procedure performed on RBS resources corresponding to the LTE bandwidth. When the LBT procedure succeeds in a single RBS, the Tx node may perform transmission on a resource corresponding to the RBS.

Here, each RBS may be defined as a start CRB and an end CRB. The start CRB may be $RB_{s,x}^{\text{start},\mu}$, and the end CRB may be $RB_{s,x}^{\text{end},\mu}$. Here, a size of guard band 913 may be nrofCRBs. For example, a size of a guard band 913, nrofCRBs, may not be expected to be set to a size smaller than the number of applicable intra-cell guard bands defined in consideration of requirements regarding an interference status of a wireless bandwidth according to subcarrier spacing $\mu$ and carrier size $N_{\text{grid,x}}^{\text{size},\mu}$.

Here, the start CRB and the end CRB for each RBS (911, 912) may be determined based on RBS index s, and RBS index s may be $s \in \{0,1, ... , N_{\text{RB-set,x}} - 1\}$. That is, RBS index s may be a resource block with a size of $RB_{s,x}^{\text{size},\mu}$, and $RB_{s,x}^{\text{size},\mu}$ denotes the number of CRBs determined through the start CRB and the end CRB based on Equation 3 below. Also, in each RBS, the start CRB and the end CRB may be as shown in Equation 4 and Equation 5 below.

$$[\text{Equation 3}]$$

$$RB_{s,x}^{\text{size},\mu} = RB_{s,x}^{\text{end},\mu} - RB_{s,x}^{\text{start},\mu} + 1$$

[Equation 4]

$$RB_{s,x}^{\text{start},\mu} = N_{\text{grid},x}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

[Equation 5]

$$RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$$

For example, if the UE is not provided with IntraCellGuardBandsPerSCS parameter configuration, CRB indexes for a nominal intra-cell guard band and an RBS pattern based on carrier $\mu$ and carrier size $N_{\text{grid},x}^{\text{size},\mu}$ may be determined according to requirements of RF standard. Also, for example, if the aforementioned nominal intra-cell guard band and RBS pattern do not include an intra-cell guard band, an RBS of the corresponding carrier may be assumed to be 1.

For example, in FIG. 9, two LBT BWs (RBS 0, RBS1) may be configured in a single BWP 922 within a single carrier bandwidth. Here, a single guard band 913 may be configured between the two RBSs 911 and 913. A location of each of the two RBSs 911 and 913 may be determined as shown in FIG. 9, based on the aforementioned higher layer parameter. Also, for example, when a plurality of BWPs 921 and 923 are configured within a single carrier bandwidth, an RBS associated with each BWP may be verified. Here, RBSs corresponding to a first RBS (=s0, 912) and a last RBS(=s1, 911) of each BWP among the RBSs 911 and 912 within the carrier may be indexed through s0 and s1 indexes.

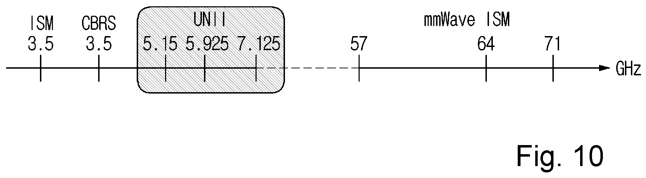

FIG. 10 illustrates an unlicensed band applicable to the present disclosure. Referring to FIG. 10, an NR-U band that is an unlicensed band of a wireless communication system (e.g., NR) may include two frequency ranges, a low frequency band of 7 GHz or less and a high frequency band of 60 GHz. However, it is only an example and may not be limited thereto. For example, in FIG. 10, the band of 2.4 GHz may be used for industrial scientific medical (ISM), the band of 3.5 GHz may be used for citizens broadband radio services (CBRS), and the band of 5 GHz to 7 GHz may be used for an unlicensed national information infrastructure (UNII). The UNII (5.925 GHz to 7.125 GHz) band may include a plurality of bands (UNII-1, UNII-2, ..., UNII-8). For each of the plurality of bands (UNII-1, UNII-2, ..., UNII-8) within the UNII, different transmission power, indoor/outdoor operation, maximum power effective isotropic radiated power (EIRP), and dynamic frequency selection (DFS) requirements may be determined, but it may not be limited to a specific form.

The band of 5 GHz to 6 GHz may be divided into non-overlapping 20 MHz channel bandwidths. Here, channels with wide bandwidths, such as 40 MHz, 80 MHz, and 160 MHz, may be configured based on boundaries. For example, A portion of 6 GHz band may coexist with a system using backhaul communication (UNII-5, UNII-7), satellite (UNII-5), broadcasting (UNII-6, UNII-8), and an ultra -wide band (UWB) system (UNII-6). The number of channels in the UNII-5 band (5.925 to 6.425 GHz) may be 24, 12, 6, and 4 at 20 MHz, 40 MHz, 80 MHz, and 160 MHz, respectively. Also, the UNII-5 band (5.925 to 6.425 GHz) may be used outside indoor and protected areas. Here, indoors may be determined as EIRP 30 dBm (AP) and 24 dBM (UE), and outdoors may be determined as EIRP 36 dBm (AP) and 30 dBM (UE), but they may not be limited to specific forms.

A channel described below may be a portion of a single carrier or a plurality of consecutive resource blocks (RBs) within the carrier. For example, a channel access procedure may be a procedure of verifying a channel based on sensing to perform transmission. In the case of performing the channel access procedure, the base station or the UE may perform energy detection based on a slot unit, and may determine that the channel is in an idle state if it is less than or equal to a preset value. In the following, a method of operating in the unlicensed band based on the aforementioned operation is described.

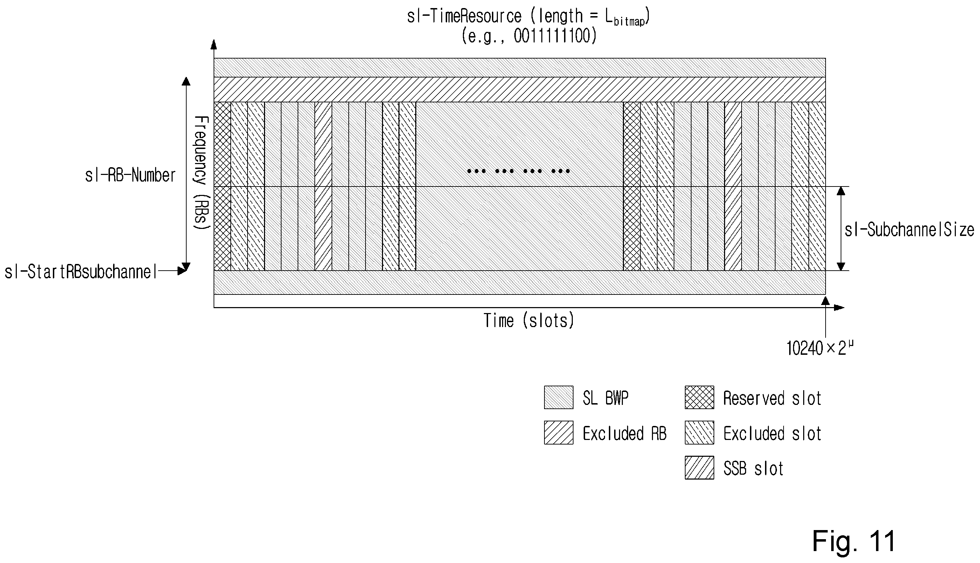

FIG. 11 illustrates a sidelink resource pool to which the present disclosure may apply. Referring to FIG. 11, a plurality of Tx resource pools (RPs) and Rx RPs may be configured to the UE. The resource pool may be identified by an identifier (ID) and added to or removed from the UE. Also, for example, each resource pool configuration may be different. In detail, PSCCH, PSSCH and PSFCH configuration of the resource pool may be different for each resource pool. Also, the resource pool may be configured with a start location of a subchannel indicating a location of a resource, the number of RBs, and a subchannel size in terms of frequency within a sidelink bandwidth part (SL BWP). Also, in the resource pool, locations of time resources may be configured in a bitmap format. Here, time resources may be mapped except for slots used in SSB and uplink, and may be repeatedly applied for each bit configured within a system frame number (SFN).

In detail, for example, referring to FIG. 11, the UE may determine a resource location in a specific resource pool within the SL BWP. The subchannel size may represent a physical resource block (PRB) as a minimum unit that selects resources. Also, "sl-StartRBsubchannel" may denote a start RB of a subchannel within the SL BWP, "sl-RB-Number" may denote the number of RBs available within the SL BWP, and "sl-SubchannelSize" may denote a size of a single subchannel. The UE may determine the number of subchannels to be used within the SL BWP based on the aforementioned parameters. Also, for example, time axis resources may be indicated in slot units through "sl- TimeResource." In detail, for example, when the UE receives indication of "0011111100" as a 10-bit indicator, the UE may use resources of a slot indicating 1, excluding a slot that includes a reserved slot SSB. Also, the UE may not use a slot that is not included in the aforementioned subchannel RB within the SL BWP, or that is indicated with 0 in "sl-TimeResource." Also, for example, up to 4 SL BWPs may be configured, and one of the configured BWPs may be activated and used. Also, within the SL BWP, up to eight Tx resource pools may be configured and up to 16 Rx resource pools may be configured, which is not limited to a specific embodiment.

Also, the UE may receive data and perform decoding, and may transmit hybrid automatic repeat and request (HARQ) feedback as a response based on a reception success status. For example, the UE may determine whether decoding is a failure by combining an initial transmission and a retransmission. In a current wireless communication system (e.g., NR), both downlink (DL) and uplink (UL) use an asynchronous HARQ incremental redundancy (IR) method. The base station may provide HARQ feedback timing configuration to the UE through a radio resource control (RRC) message, and may flexibly indicate HARQ feedback timing through DCI.

In detail, for example, the base station may indicate transmission timing to the UE through DCI. For example, K0 within DCI may indicate an interval between DCI transmitted to a physical downlink control channel (PDCCH) and DL data transmitted to a physical downlink shared channel (PDSCH). Also, K1 within DCI may indicate an interval between PDSCH DL data reception and UL HARQ feedback timing transmitted to a physical uplink control channel (PUCCH). Also, K2 within DCI may indicate an interval between PDCCH UL grant reception and UL data transmitted to a physical uplink shared channel (PUSCH).

Also, for example, even in sidelink communication, a HARQ feedback operation may be considered. In detail, a medium access control (MAC) entity of the UE may include at most one sidelink HARQ entity for sidelink shared channel (SL-SCH) transmission. The sidelink HARQ entity may maintain up to 16 sidelink processes. The sidelink process may be configured to enable transmission of a plurality of MAC protocol data units (PUDs). For example, in resource assignment mode 2 in which the UE directly determines sidelink resources, the UE may configure up to four sidelink processes for multiple MAC PDU transmission. Also, a sidelink grant and information related to the sidelink grant delivered to the MAC entity may be configured in association with the sidelink process. Each sidelink process may be used to transmit a single transport block (TB).

As another example, a sidelink discontinuous reception (DRX) operation may be considered. Here, a sidelink DRX HARQ round trip time (RTT) timer (sl-drx-HARQ-RTT-Timer) may be configured to the sidelink process within the sidelink HARQ entity of the UE, and an operation based on this may be performed. The sidelink DRX HARQ RTT timer may be differently configured based on at least one of HARQ feedback disable/enable, presence or absence of a physical sidelink feedback channel (PSFCH), presence or absence of retransmission resources within SCI, and a HARQ feedback method (e.g., ACK/NACK, NACK Only).

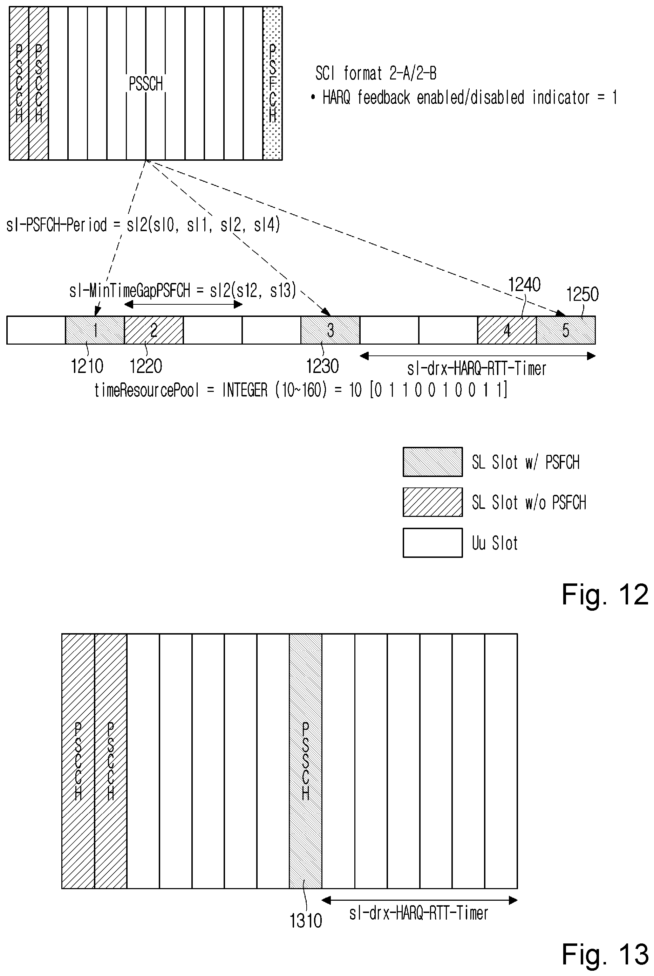

FIG. 12 illustrates a sidelink DRX HARQ RTT timer applied to the present disclosure. For example, FIG. 12 may be a case in which HARQ feedback is enabled with a HARQ feedback enable indicator within SCI set to a first value in a resource pool in which a PSFCH is configured, and retransmission resources are not indicated. However, it is only a configuration for clarity of description and is not limited to the corresponding embodiment.

In FIG. 12, a number 1 slot 1210 may be a slot in which the PSFCH is configured, and a number 2 slot 1220 may be a slot in which the PSFCH is not configured. When the UE receives a PSCCH and a PSSCH in the number 1 slot 1210, the UE may transmit HARQ feedback in a sidelink slot (slot 3 1230) in which the PSFCH is configured, after two slots based on the configured sl-MinTimeGapPSFCH parameter. The UE may expect to receive a retransmission grant or a new grant based on HARQ feedback in a first slot after PSFCH transmission, so may perform an operation based on the sidelink DRX HARQ RTT timer (sl-drx-HARQ-RTT-Timer) as the sidelink DRX timer configured by higher layer parameters. For example, the sidelink DRX HARQ RTT timer (sl-drx-HARQ-RTT-Timer) may refer to a minimum time before expecting assignment for HARQ retransmission, and the UE may be in a sleep state during the corresponding period of time. Also, the sidelink DRX HARQ RTT timer (SL drx-HARQ-RTT-Timer) may be configured for each HARQ process. For example, for clarity of description, it is referred to as the sidelink DRX HARQ RTT timer below, but the sidelink DRX HARQ RTT timer that performs the same function may also be referred to using a different name and may not be limited to a specific form. As another example, although the UE does not perform sidelink HARQ feedback transmission through UL transmission due to UL/SL prioritization, the UE may operate the sidelink DRX HARQ RTT timer (sl-drx-HARQ-RTT-Timer) in a first slot after PSFCH resource ends, to receive a retransmission grant.

For example, when retransmission resources are configured within SCI as a case in which HARQ feedback is enabled within a resource pool in which the PSFCH is configured, the sidelink DRX HARQ RTT timer (sl-drx-HARQ-RTT-Timer) may be derived by subsequent retransmission resource within SCI. As another example, when HARQ feedback is disabled and retransmission resources are absent within SCI, the UE may perform a sidelink DRX HARQ RTT timer (sl-drx-HARQ-RTT-Timer) operation after the PSFCH. On the other hand, when HARQ feedback is disabled and retransmission resources are present within SCI, the UE may operate the sidelink DRX HARQ RTT timer (sl-drx-HARQ-RTT-Timer) from the received PSSCH to subsequent retransmission resource within SCI, and this may reduce power consumption of the UE.

FIG. 13 illustrates a method of operating a sidelink timer in a resource pool in which a PSFCH is not configured, applied to the present disclosure. Referring to FIG. 13, the resource pool in which the PSFCH is not configured may be considered. Since the UE does not perform a HARQ feedback operation in the corresponding resource pool, the UE may operate a sidelink DRX HARQ RTT timer (sl-drx-HARQ-RTT-Timer) after a PSCCH 1310 indicated in SCI. For example, the sidelink DRX HARQ RTT timer (sl-drx-HARQ-RTT-Timer) may start based on a slot unit, and a timer length may be configured based on a slot unit. Also, the sidelink DRX HARQ RTT timer (sl-drx-HARQ-RTT-Timer) may differently operate depending on whether retransmission resources are present within SCI. In detail, for example, in a case in which retransmission resources are absent within SCI, operation may be different depending on whether retransmission resources are present within SCI. When retransmission resources are absent within SCI, the sidelink DRX HARQ RTT timer (sl-drx-HARQ-RTT-Timer) may operate regardless of HARQ feedback enable/disable. On the other hand, when retransmission resources are present within SCI, the sidelink DRX HARQ RTT timer (sl-drx-HARQ-RTT-Timer) may be set to a time from the PSSCH to the subsequent retransmission resource. As another example, two sidelink DRX HARQ RTT timer (sl-drx-HARQ-RTT-Timer) values may be set for presence and absence of the PSFCH within the resource pool, and it is not limited to a specific embodiment.

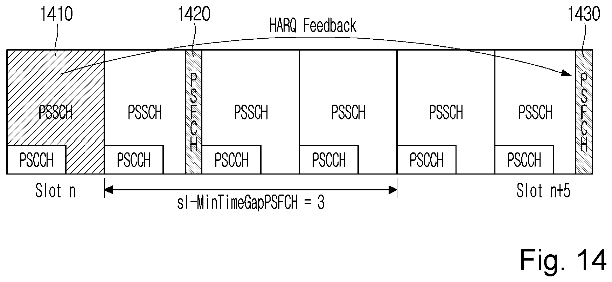

FIG. 14 illustrates a sidelink HARQ feedback operation applied to the present disclosure. Referring to FIG. 14, when an Rx UE receives a PSSCH 1410 in a slot n, the Rx UE may determine a PSFCH occasion to perform HARQ feedback according to a configured higher layer parameter (e.g., sl-MinTimeGapPSFCH). In detail, for example, in FIG. 14, as the higher layer parameter, sl-MinTimeGapPSFCH may be configured with three slots. The UE may perform HARQ feedback in a first PSFCH occasion 1430 that occurs after slot n+3 that is three slots from slot n. In detail, for example, a case in which a PSFCH period is set to 4 within the resource pool may be considered. However, it is only an example for clarity of description and the present disclosure may not be limited thereto. A PSFCH occasion may be configured for every four sidelink slots based on PSFCH period 4. In FIG. 14, when the UE receives the PSSCH 1410 in the slot n, the UE may perform HARQ feedback in slot n+5 in which the first PSFCH occasion 1430 is present after sl-MinTimeGapPSFCH.

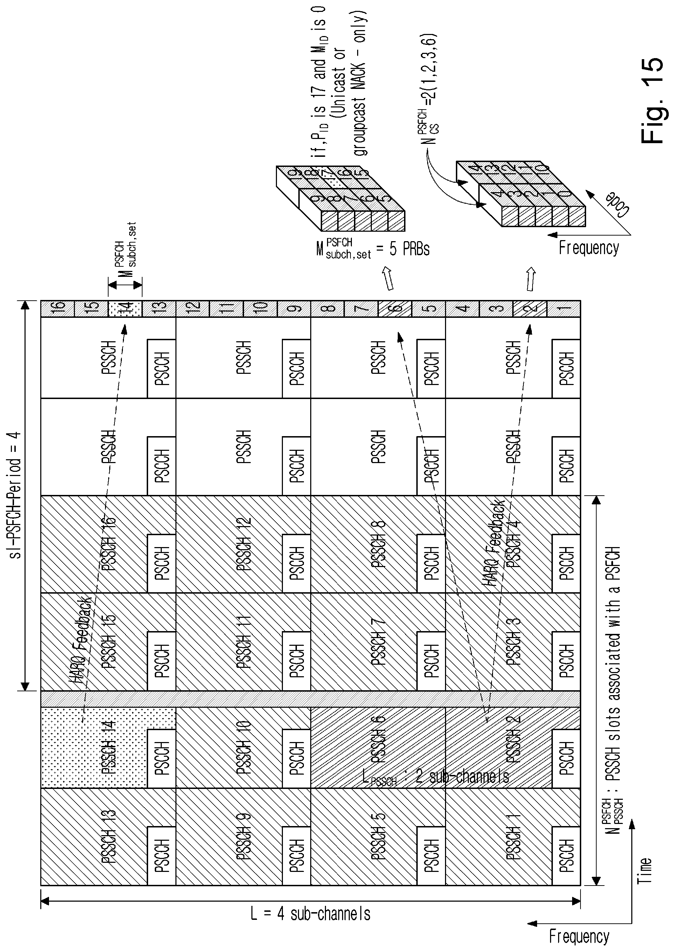

FIG. 15 illustrates PSSCH-PSFCH mapping for HARQ feedback transmission, applied to the present disclosure. Referring to FIG. 15, sidelink HARQ feedback resources may not be explicitly indicated and may be implicitly configured. The UE may derive PSSCH and PSFCH association relationship based on a pre-configured higher layer parameter, and may perform HARQ feedback through PSFCH resources associated with the received PSSCH. In detail, for example, in FIG. 15, the number of subchannels ($N_{subch}$, sl-NumSubchannel) within the resource pool is 4 and the PSFCH occasion may be configured for every four slots according to sl-PSFCH-period. Here, the number of PSSCH slots ($N_{PSSCH}^{PSFCH}$) associated with a single PSFCH occasion may be 4. However, it is only an example for clarity of description and may not be limited to the corresponding embodiment.

The UE may perform PSFCH resource mapping according to the PSSCH through the configured parameter. Also, physical resource blocks (PRBs) ($M_{PRB,set}^{PSFCH}$) for HARQ feedback within the PSFCH occasion may be indicated as 0 or 1 as a bit string. For example, in FIG. 15, the total number of PRBs ($M_{PRB,set}^{PSFCH}$) for HARQ feedback within the PSFCH occasion may be 80. Here, 80 PRBs for HARQ feedback may represent PRBs indicated as 1 among 10 to 270 bit strings. 80 PRBs for HARQ feedback within one PSFCH occasion may be assigned to slots and subchannels associated with the PSFCH based on Equation 6 below.

[Equation 6]

$$\left[\left(i + j \cdot N_{PSSCH}^{PSFCH}\right) \cdot M_{subch,slot}^{PSFCH}, \left(i + 1 + j \cdot N_{PSSCH}^{PSFCH}\right) \cdot M_{subch,slot}^{PSFCH}\right]$$

Here, $i$ ($0 \leq i < N_{PSSCH}^{PSFCH}$) denotes a slot number associated with the PSFCH, and $j$ ($0 \leq j < N_{subch}$) denotes a number of a subchannel. Also, $M_{subch,slot}^{PSFCH}$ denotes a value acquired by dividing the number of PRBs ($M_{PRB,set}^{PSFCH}$) for HARQ feedback by the number of subchannels and the number of slots associated with the PSFCH. That is, the PRBs ($M_{PRB,set}^{PSFCH}$) for HARQ feedback within the PSFCH occasion may be assigned by $M_{subch,slot}^{PSFCH}$ for each subchannel of slots associated with the PSFCH. For example, in FIG. 15, if the number of slots associated with the PSFCH is four with four subchannels, 16 subchannels may be present. Here, if the number of PRBs ( $M_{PRB,set}^{PSFCH}$ ) for HARQ feedback is 80, five PRBs ( $M_{subch,slot}^{PSFCH}$ ) for each subchannel may be used for HARQ feedback.

The UE selects a resource used to transmit HARQ feedback within subchannel associated PSFCH PRBs. In detail, in $M_{subch,slot}^{PSFCH}$, each PRB has two cyclic shift (CS) pairs ( $N_{CS}^{PSFCH}$, sl-NumMuxCS-pair), and when sl-PSFCH-CandidateResourceType is set to 'startSubCH' ( $N_{type}^{PSFCH} = 1$ ), the number of PSFCH candidate resources associated with a specific subchannel may be derived as shown in Equation 7.

[Equation 7]

$$R_{PRB,CS}^{PSFCH} = N_{type}^{PSFCH} \cdot M_{subch,slot}^{PSFCH} \cdot N_{CS}^{PSFCH}$$

Here, $R_{PRB,CS}^{PSFCH}$ may be 20, and numbers of 20 candidate resources may be determined according to CS order after PRB ascending order. The UE may select the PSFCH resource according to an index derived from Equation 8 below. As another example, when sl-PSFCH-CandidateResourceType is set to allocSubCH ( $N_{type}^{PSFCH} = N_{subch}^{PSSCH}$ ), the number of PSFCH candidate resources may be differently configured.

[Equation 8]

$$\text{Index of a PSFCH resource} = (P_{ID} + M_{ID}) \bmod R_{PRB,CS}^{PSFCH}$$

Here, $P_{ID}$ denotes a physical layer source ID indicated through SCI format 2-A/2-B/2-C, and $M_{ID}$ denotes a higher layer UE ID used for groupcast HARQ ACK-NACK feedback. For example, in the case of unicast or groupcast HARQ NACK-only, $M_{ID}$ may be 0.

Also, for example, the UE may perform a listen before talk (LBT) procedure for channel occupancy in the unlicensed band. The LBT procedure may be a procedure of determining whether a channel is occupied through channel clear assessment (CCA) check before using the channel. The CCA check may be an operation of performing sensing during a CCA period. The CCA check may use energy detection (ED) to detect presence or absence of another signal in the channel. In detail, if energy (e.g., received signal strength, received signal strength indicator (RSSI)) detected during the CCA period is less than an ED threshold, the UE may determine that the channel is not occupied and may occupy the channel during a COT. On the other hand, if the energy detected during the CCA period is greater than the ED threshold, the UE may determine that the channel is occupied and the CCA period may be extended until the channel is occupied. For example, LBT may be a mandatory procedure for 5 GHz and 60 GHz unlicensed band operation in Europe and Japan, and may not be defined as an essential procedure in the United States and China. A CCA slot duration may be 9 μs at 5 GHz and may be 5 μs at 60 GHz, but may not be limited thereto. In more detail, an initial CCA may be set to a multiple of 5 μs at 60 GHz, an extended CCA may be set to 8+m×5 μs, and m may be configured as a backoff counter. Also, an ED threshold in 20 MHz channel bandwidth may be set to -72 dBm at 5 GHz, and may be set to -47 dBm at 60 GHz, but is not limited thereto.

Also, for example, LBT category may consider category 1 to category 4 shown in Table 10 below, but may not be limited thereto.

[Table 10]

| |
|---|
| - Category 1 (Cat 1 LBT): Transmission is performed immediately after 16 μs switching interval. |
| - Category 2 (Cat 2 LBT): LBT procedure without random backoff, and CCA period is fixed to 25 μs. |
| - Category 3 (Cat 3 LBT): LBT procedure with random backoff and fixed contention window, and extended CCA period is configured by random variables within fixed contention window. |
| - Category 4 (Cat 4 LBT): LBT procedure with random backoff and variable contention window, and extended CCA period is configured by random variables within contention window. |

Here, the UE may use different categories depending on the transmission purposes. For example, the UE and the base station may use Cat 4 LBT for data transmission purpose in license-assisted access (LAA). On the other hand, when the base station transmits a discovery reference signal, Cat 2 LBT may be used. As another example, in NR-U, if a transmission interval between DL and UL is less than 16 $\mu$s in a COT sharing operation in a situation in which the base station occupies a channel, the UE may perform Cat 1 LBT without CCA check. On the other hand, if the transmission interval between DL and UL is greater than 16 $\mu$s and less than 25 $\mu$s, the UE may perform Cat 2 LBT that uses short sensing. Also, if the transmission interval between DL and UL is greater than 25 $\mu$s, the UE may perform Cat 4 LBT used for general data transmission. Here, while the LAA may support one DL/UL switching, the NR-U may support multiple DL/UL switching.

Also, for example, continuous transmission may be limited in the unlicensed band in a specific area (e.g., Europe, Japan). That is, a maximum channel occupancy time (MCOT) as a time in which the UE may continuously use the channel may be limited. For example, the MCOT may be limited to 2 ms, 4 ms, or 6 ms according to priority class in the band of 5 GHz. Also, the MCOT may be limited to 9 ms in the band of 60 GHz, but may not be limited thereto. Also, for example, the UE and the baes station may share the COT in the band of 5 GHz and 60 GHz. That is, downlink (DL) and uplink (UL) transmission combination may be possible within COT. In detail, when the base station occupies the channel through the LBT procedure and performs DL transmission to the UE, the UE may perform UL transmission immediately without CCA check.

The UE may occupy and use a channel for the MCOT after LBT success. Here, due to a flexible slot structure such as a mini slot, the current wireless communication system (e.g., NR) may inefficiently perform a transmission and reception operation of the unlicensed band compared to the existing wireless communication system (e.g., LTE). Therefore, the COT may be shared between the base station and the UE, and the UE may improve spectral efficiency or may perform a fast response operation.

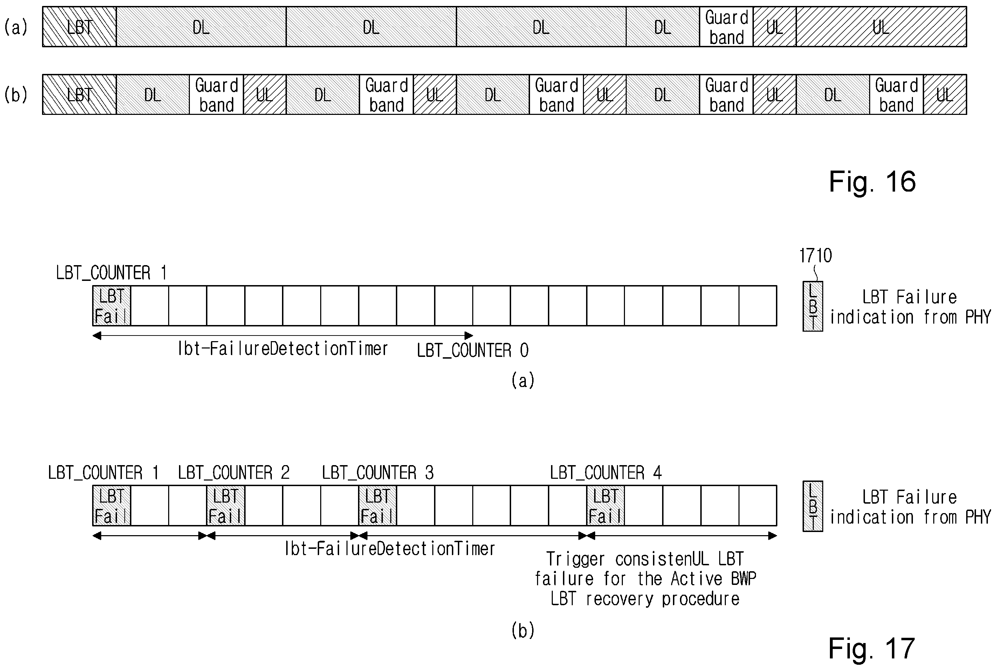

FIG. 16 illustrates a COT structure applied to the present disclosure. For example, the wireless communication system may support single DL/UL switching or multiple DL/UL switching. In detail, for example, referring to (a) of FIG. 16, single DL/UL switching may be a configuration in which single DL/UL switching is performed within the COT. The single DL/UL switching may reduce overhead since a guard band is small. If an interval between DL and UL is greater than 16 $\mu$s, a plurality of LBT procedures may not be performed. However, in single DL/UL switching, a UL operation is configured only once after a certain period of time after DL, so a delay in HARQ feedback and UL scheduling may occur. For example, the UL scheduling delay may occur even in a case in which Cat 4 LBT is attempted and fails when performing a UL operation. Considering the above, a single DL/UL switching COT configuration may be suitable for enhanced Mobile BroadBand (eMBB) traffic with high throughput and flexible delay requirements, but is not limited thereto.

Also, for example, referring to (b) of FIG. 16, multiple DL/UL switching COT configuration may be configured with a plurality of opportunities capable of performing UL. Therefore, in the multiple DL/UL switching COT configuration, HARQ feedback configuration may be simple. In the case of performing sensing according to UL transmission LBT (i.e., if an interval between UL and DL is greater than 16 $\mu$s), the multiple DL/UL switching COT configuration may ensure channel use. Since the base station performs CCA check for DL transmission, LBT may be successful if LBT is performed in a relatively close time. However, since the multiple DL/UL switching COT configuration includes a plurality of guard bands, a plurality of LBT procedures may need to be performed. Considering the above, the multiple DL/UL switching COT configuration may be suitable for massive Machine Type Communications (mMTC) with delay-sensitive traffic and low-load traffic, such as ultra-reliable low latency communications (URLLC) or enhanced V2X (eV2X), but is not limited thereto.

Also, for example, to limit interference between inter-RAT and intra-RAT in the unlicensed band operation, power (EIRP, PSD) may be limited in all areas and bands, as described above.

Also, for example, an occupied channel bandwidth (OCB) may be defined as that the bandwidth includes 99% of signal power in a specific area. This may indicate that most of the channel bandwidth needs to be used when accessing a channel in the unlicensed band. For example, the OCB may be 70 to 100% of a nominal channel bandwidth (NCB) at 5 GHz, and the OCB may be 80 to 100% of the NCB at 60 GHz, but is not limited thereto.

Also, as an unlicensed band scenario, licensed assisted access (LAA), the existing unlicensed band communication (LTE-unlicensed), and multi fire technologies may be defined for operation in the band of 5 GHz. However, the current unlicensed band communication (NR-unlicensed) may be designed by considering a plurality of bands, such as 2.4 GHz, 3.5 GHz, 5 GHz, 6 GHz, 37 GHz, and 60 GHz, but is not limited thereto. Also, for example, the unlicensed band may be divided into the band of 7 GHz or less and mmWave band. 7 GHz may include 2.4, 3.5, 5, and 6 GHz, and the mmWave band may include 37 GHz and 60 GHz, but it may not be limited thereto.

FIG. 17 illustrates a method of detecting consistent LBT failure, applicable to the present disclosure. In a wireless communication system (e.g., NR), the UE may perform LBT in the unlicensed band. Referring to FIG. 17, the UE may detect LBT failure. Before performing transmission, a physical layer of the UE may perform an LBT procedure and, if LBT is successful, may occupy a channel and may perform the transmission. On the contrary, if LBT is failure in the LBT procedure, the UE may not occupy the channel and may not perform the transmission. Here, when the UE does not occupy the channel based on LBT failure, the physical layer of the UE may deliver an LBT failure indication 1710 to a MAC layer of the UE. The MAC layer of the UE may be configured with a consistent LBT failure recovery procedure through higher layer signaling (e.g., RRC). For example, the UE may count and detect the consistent LBT failure per uplink bandwidth part (UL BWP).

Also, the UE may be configured with an LBT failure instance maximum counter (lbt-FailureInstanceMaxCounter) and an LBT failure detection timer (lbt-FailureDetectionTimer) through higher layer signaling. The UE may be configured with an LBT counter (LBT_COUNTER) that counts an LBT failure per serving cell as a UE variable through higher layer signaling.

In detail, for example, referring to (a) of FIG. 17, when the MAC layer of the UE receives the LBT failure indication 1710 from the physical layer of the UE, the MAC layer of the UE may increase the LBT counter (LBT_COUNTER) and may (re)start the LBT failure detection timer (lbt-FailureDetectionTimer). Here, if the LBT failure detection timer (lbt-FailureDetectionTimer) expires, the UE may initialize the LBT counter (LBT_COUNTER) to 0. Also, referring to (b) of FIG. 17, when the LBT counter (LBT_COUNTER) is equal to or greater than the LBT failure instance maximum counter (lbt-FailureInstanceMaxCounter), the UE may generate consistent LBT failure. For example, when a serving cell in which the consistent LBT failure is triggered is a special cell (SpCell) and the consistent LBT failure is triggered in all UL BWPs in which physical random access channel (PRACH) occasions are configured in carrier of a corresponding serving cell, the UE may indicate the consistent LBT failure through higher layer. For example, when the consistent LBT failure is not triggered in a UL BWP in which one or more PRACH occasions are configured, the UE may suspend random access that is ongoing to the serving cell and may perform random access by configuring PRACH occasions in the enabled UL BWP and by switching the UL BWP in which the consistent LBT failure is not triggered.

Also, for example, the consistent LBT failure may be triggered and may not be canceled for SpCell. When the MAC layer of the UE has uplink-shared channel (UL-SCH) resources for new transmission and includes an LBT failure MAC CE and a sub-header depending on logical channel prioritization (LCP) results, it is possible to indicate a multiplexing and assembly procedure to generate an LBT failure MAC CE. For example, SpCell may represent PCell. Also, in the case of dual connectivity (DC) connection, SpCell may represent PCell of a master cell group (MCG) and PSCell of a secondary cell group (SCG). Also, for example, the serving cell may represent PCell, PSCell, or SCell.

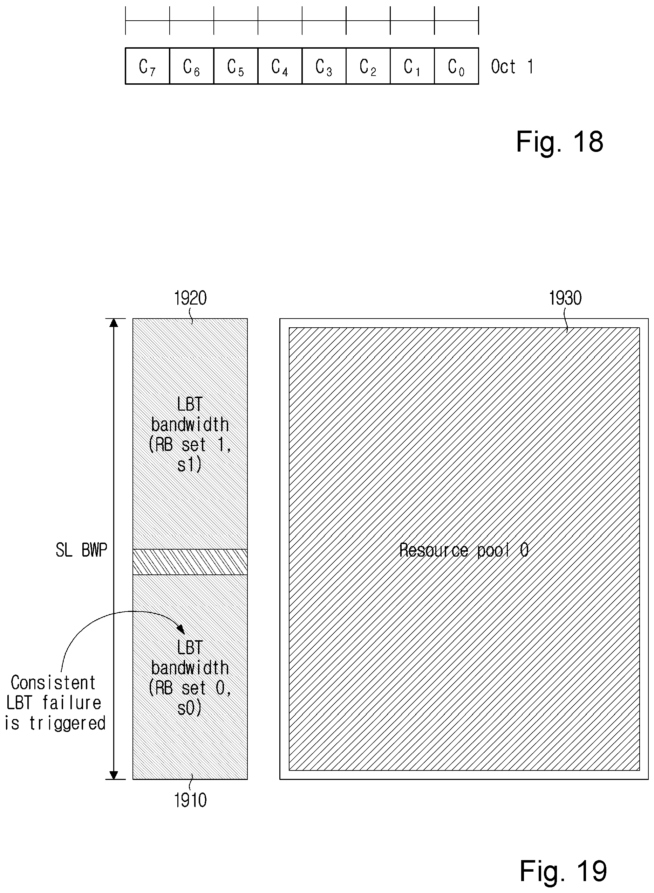

Also, for example, a case in which consistent LBT failure is triggered and is not canceled for at least one SCell may be considered. Here, when the MAC layer of the UE has UL-SCH resources for new transmission and may include an LBT failure MAC CE and a subheader, the MAC layer may indicate the multiplexing and assembly procedure to generate the LBT failure MAC CE. Otherwise, the MAC layer of the UE may perform a scheduling request (SR) procedure to transmit the LBT failure MAC CE. Also, for example, when the consistent LBT failure is triggered for SpCell and random access is successfully performed after switching to another UL BWP, the MAC layer of the UE may cancel all the triggered consistent LBT failure. Also, when the MAC layer of the UE does not receive LBT failure from the physical layer in relation to transmission of a MAC protocol data unit (PDU) that includes the LBT failure MAC CE, the MAC layer of the UE may cancel all consistent LBT failure triggered for SCell included in the LBT failure MAC CE. For example, FIG. 18 illustrates an LBT failure MAC CE, applied to the present disclosure. Referring to FIG. 18, i in $C_i$ may represent an index of a serving cell (ServCellIndex). Here, a field of the serving cell in which the consistent LBT failure is triggered may be set to 1 and other fields may be set to 0.

For example, sidelink communication may support an improved V2X application. Also, the sidelink communication may support proximity-based public safety and commercial services, but is not limited thereto. The sidelink communication may support an operation of improving power consumption in the UE with limited battery and a partial sensing, discontinuous reception (DRX), and inter-UE coordination operation to increase data reliability, but may not be limited thereto.

Also, an operation of considering an increased data rate in the sidelink communication (increased sidelink data rate) may be performed. For example, the increased data rate may be used to share sensor information of large data, such as a video, between vehicles that perform autonomous driving at a high level. The data rate may be improved based on a method, such as sidelink carrier aggregation or use of a sidelink unlicensed band, but may not be limited to the corresponding embodiment. Also, an operation of supporting new carrier frequencies for sidelink communication may be considered. The data rate may be improved through an FR2 sidelink operation with new frequencies and wide bandwidth. For example, currently, the use of intelligent transport system (ITS) frequency band may be limited to an application associated with ITS safety. However, if an operation, such as the use of the unlicensed band, is supported in sidelink communication, implementation of commercial services may be expected as the performance improves. Also, for example, a V2X scenario in which LTE V2X and NR V2X UEs share the same frequency channel may be considered. A method for different types of UEs to effectively perform resource assignment without adversely affecting each other may be required, but the method may not be limited thereto.

In the following, a consistent LBT failure operation according to a sidelink unlicensed band (SL-U) is described in consideration of the above. For example, the UE may perform an LBT procedure in the SL-U and may perform a sidelink transmission according to LBT success. On the other hand, if the UE performs the LBT procedure in the SL-U and does not occupy the channel due to LBT failure, the UE may not perform the sidelink transmission. A consistent LBT failure declaration and recovery operation considering the above is described below.

For example, the UE may perform a consistent LBT failure detection and recovery procedure by considering the unlicensed band. The UE may perform the LBT procedure in the unlicensed band and, if LBT is successful, may occupy the channel and may perform transmission. On the contrary, if the LBT fails in the unlicensed band, the UE may not occupy the channel and may not perform transmission. Also, if LBT consistently fails, the UE may not occupy the channel and may not perform transmission. Also, if the LBT consistently fails, the UE may perform a BWP switching and LBT failure MAC CE reporting procedure and, through this, may perform an LBT failure recovery operation. In the unlicensed band of the wireless communication system, an LBT failure detection unit may be an UL BWP. Here, for example, unlike the unlicensed band of the wireless communication system, a resource pool may be present in the sidelink unlicensed band (SL-U). Also, the SL-U may have a different resource structure from the wireless communication system. Considering the above, the LBT detection unit may be set in the SL-U to be different from the unlicensed band of the wireless communication system and, based on this, may perform an operation after the consistent LBT failure.

In detail, for example, the LBT failure detection unit may consider at least one of an RB set (LBT bandwidth), a resource pool, an SL carrier, and a BWP. For example, in the SL-U, the UE may perform LBT on an RB set basis and may perform channel access and occupancy. Here, the SL carrier may include a plurality of RB sets. For example, since the SL BWP is set to one, it may be inappropriate as a consistent LBT failure detection unit, but may not be limited thereto. Considering the above, the consistent LBT failure detection unit may be set on a resource pool or RB set basis, and description related thereto is made below.

The physical layer of the UE may occupy the channel only at a specific point in time based on LBT success in the unlicensed band and may continuously attempt a channel access to the occupied specific channel (e.g., RB set). Here, the consistent LBT failure may be a situation in which the LBT failure is consistently triggered. That is, a channel in which the consistent LBT failure is triggered (e.g., RB set or resource pool) may represent a situation in which it is difficult to occupy the channel due to high load and there is a need to attempt channel access to another channel.

Here, for example, in a mode in which the UE directly performs scheduling, the mode 2 UE may detect the consistent LBT failure based on the set consistent LBT failure detection unit and may perform an operation based on this. Also, in a mode in which the base station schedules sidelink communication resources, the UE may perform consistent LBT failure reporting to the base station for consistent LBT failure recovery, and description related thereto is made below.

For example, detection of the consistent LBT failure may be performed on an RB set basis or a resource pool basis, as shown in Table 11 below. In detail, for example, in Table 11, as a case in which the consistent LBT failure is detected on the RB set basis, if the resource pool includes a plurality of RB sets and the consistent LBT failure is not detected from at least one RB set, resource reselection may be performed. On the other hand, as a case in which the consistent LBT failure is detected on the RB set basis, if the resource pool includes a single RB set and the consistent LBT failure is detected from the corresponding RB set, the resource pool reselection may be performed. As another example, as a case in which the consistent LBT failure is detected on the resource pool basis, if the SL BWP includes a resource pool in which the consistent LBT failure is not triggered and the consistent LBT failure is detected from the set, the resource pool reselection may be performed.

[Table 11]

| Consistent LBT failure is detected per RB set |
| --- |
| - Resource re-selection; if Resource pool contains Multiple RB sets and at least one RB set has not been detected Consistent LBT failure;<br>- Resource pool re-selection; if Resource pool contains Single RB set; |
| **Consistent LBT failure is detected per Resource pool** |
| Resource pool re-selection; if SL BWP contains resource pool where Consistent LBT failure is not triggered; |

For example, a single SL BWP may be set to the UE and a plurality of resource pools may be configured to the set SL BWP. Also, the resource pool may include at least one RB set, and the RB set may be a unit for performing LBT.

Here, as shown in Table 11 above, in the case of detecting the consistent LBT failure per RB set, the MAC layer of the UE may select a resource pool, and may select a plurality of resources divided into time and frequency resources based on single/multiple MAC PDUs and the number of HARQ retransmissions. Also, the MAC layer of the UE may continuously perform a Tx resource (re)selection check operation until resources of the selected resource pool are released by higher layer or generation of an SL grant selected for multiple MAC PDU is canceled. The Tx resource (re)selection check may be a procedure of determining whether to maintain the use and reservation of resources selected from the resource pool based on at least one of a case in which a physical sidelink control channel (PSCCH) of the selected SL grant and a PSSCH of 2nd sidelink control information (SCK) are not SL enabled time at a destination UE, a case in which a sidelink resource reselection counter (SL_RESOURCE_RESELECTION_COUNTER) becomes 0, a case in which resources of the resource pool is (re)configured by higher layer signaling, and a case in which more than a predetermined number of resources indicated by the selected SL grant are not continuously used. For example, all selected SL grants associated with a sidelink process are released if the aforementioned condition is met, and a procedure of performing Tx resource (re) selection and assigning a selected new SL grant through new resource selection and reservation for the selected resource pool.

Also, for example, when the consistent LBT failure is detected on the RB set basis, resource selection may be performed if an RB set in which the consistent LBT failure is not triggered is included within the selected resource pool. In detail, for example, the MAC layer of the UE may select resources from the resource pool based on a single MAC PDU or a plurality of MAC PDUs, may generate a selected SL grant, and may associate the same with the sidelink process. In the unlicensed band, the UE may perform an LBT operation before performing transmission, and if LBT failure is continuously triggered, the consistent LBT failure may be triggered in the corresponding RB set in which LBT is performed. Therefore, in a case in which the UE may no longer maintain resources selected from the resource pool, if an RB set in which the consistent LBT failure is not triggered is present within the resource pool, the UE may perform resource selection from the corresponding RB set.

That is, the UE may select resources for a single MAC PDU/multiple MAC PDUs, may generate the selected SL grant, and may associate the same with the sidelink grant.

FIG. 19 illustrates an RB set-based consistent LBT failure detection method, applicable to the present disclosure. Referring to FIG. 19, an SL BWP may include two RB sets 1910 and 1920, and a resource pool 1930 may include all of the two RB sets 1910 and 1920. However, it is only an example for clarity of description, but may not be limited thereto. The MAC layer of the UE may select the resource pool 0 1930. The MAC layer of the UE may select a plurality of resources divided into time and frequency based on single/multiple MAC PDUs and the number of HARQ retransmissions. Here, the MAC layer of the UE may continuously perform a Tx resource (re)selection check operation until resources of the selected resource pool are released by higher layer signaling or generation of an SL grant selected for multiple MAC PDUs is canceled. The physical layer of the UE may perform an LBT operation before transmitting the selected SL grant using the selected resource. Here, the LBT operation may be performed on an RB set basis. When the UE performs the LBT operation and LBT failure is continuously triggered in a specific RB set, consistent LBT failure may be triggered. For example, in FIG. 19, although the consistent LBT failure may be triggered in the RB set 0 1910, it is only configuration for clarity of description and the disclosure is not limited thereto.

For example, when the consistent LBT failure is triggered in the RB set 0 1910, the MAC layer of the UE may perform different operations depending on whether the selected resource pool includes a plurality of RB sets and whether an RB set in which the consistent LBT failure is not triggered is present. In detail, for example, the resource pool 1930 includes the plurality of RB sets 1910 and 1920, and when the RB set in which the consistent LBT failure is not triggered is present, the MAC layer of the UE may release the selected SL grant associated with the sidelink process through a Tx resource (re)selection check procedure and may perform an operation of checking Tx resource (re)selection. The MAC layer of the UE may select a plurality of resources divided into time and frequency through a Tx resource (re)selection procedure based on single/multiple MAC PDUs and the number of HARQ retransmissions. Here, an operation of selecting resources within an RB set in which the consistent LBT failure is not triggered may be required. For example, the MAC layer of the UE may perform resource selection by considering whether the consistent LBT failure is triggered in a candidate resource set delivered by the physical layer of the UE. That is, the MAC layer of the UE may perform resource selection by considering whether the consistent LBT failure is triggered alone, and the existing operation of the physical layer does not affect so may be the same.

As another example, when the MAC layer of the UE selects resources from the candidate resource set delivered by the physical layer of the UE, the MAC layer of the UE may deliver RB set information in which the consistent LBT failure is triggered to the physical layer of the UE. The physical layer of the UE may configure a candidate resource set by excluding resources within the RB set in which the consistent LBT failure is triggered from the candidate resource set, and may deliver the candidate resource set to the MAC layer of the UE. In the case described above, the MAC layer of the UE may perform resource selection from the candidate resource set as before.

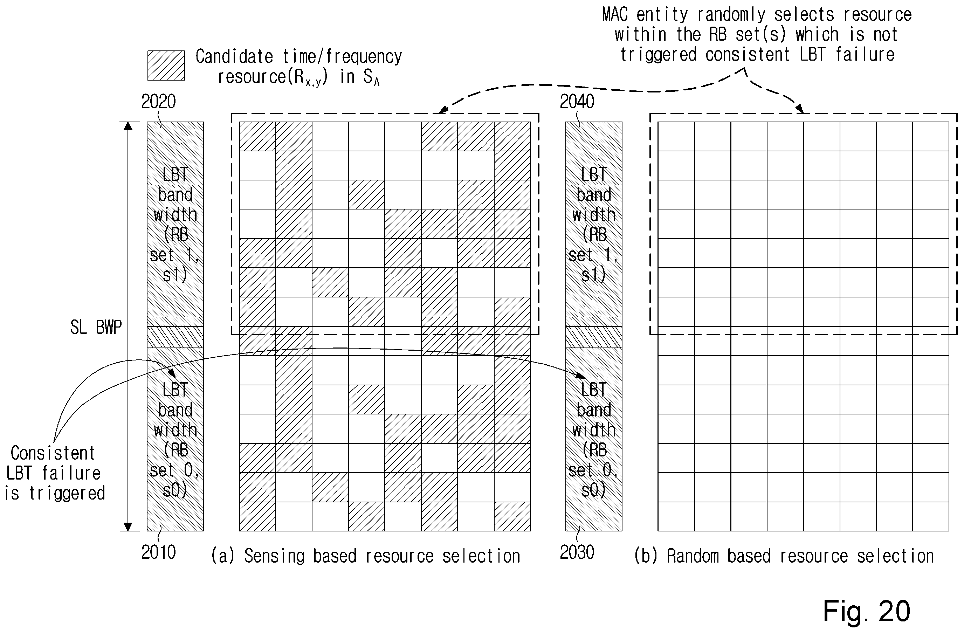

FIG. 20 illustrates a method for a MAC layer of a UE to select a resource within a resource pool based on consistent LBT failure, applicable to the present disclosure. For example, an SL BWP may include two RB sets (RB set 0 and RB set 1), and the resource pool may include two RB sets. That is, the MAC layer of the UE may select a specific resource pool that includes all of RB set 0 and RB set 1.

For example, when consistent LBT failure is detected from the unlicensed band on an RB set basis, the MAC layer of the UE may perform Tx resource (re)selection check. The MAC layer of the UE may release a selected SL grant for selected and reserved resources, and may select a plurality of resources divided into time and frequency based on single/multiple MAC PDUs and the number of HARQ retransmissions. In detail, referring to (a) of FIG. 20, if the consistent LBT failure is triggered in an RB set 0 2010, the MAC layer of the UE may generate a Tx resource (re)selection and may newly select resources based on a sensing-based resource selection method. Here, the MAC layer of the UE may select resources within an RB set (RB set 1) 2020 in which the consistent LBT failure is not triggered in a candidate resource set

($S_A$, Set A) reported by the physical layer of the UE.

As another example, referring to (b) of FIG. 20, if the consistent LBT failure is triggered in the RB set 0 2010, the MAC layer of the UE may generate a Tx resource (re)selection and may newly select resources based on a random-based resource selection method. Here, the MAC layer of the UE may select resources within the RB set (RB set 1) 2020 in which the consistent LBT failure is not triggered in the candidate resource set ($S_A$, Set A) reported by the physical layer of the UE.

Also, for example, if an RB set in which consistent LBT failure is not triggered is absent within the resource pool, the MAC layer of the UE may perform a procedure of selecting another resource pool that includes an RB set in which the consistent LBT failure is not triggered within the SL BWP.

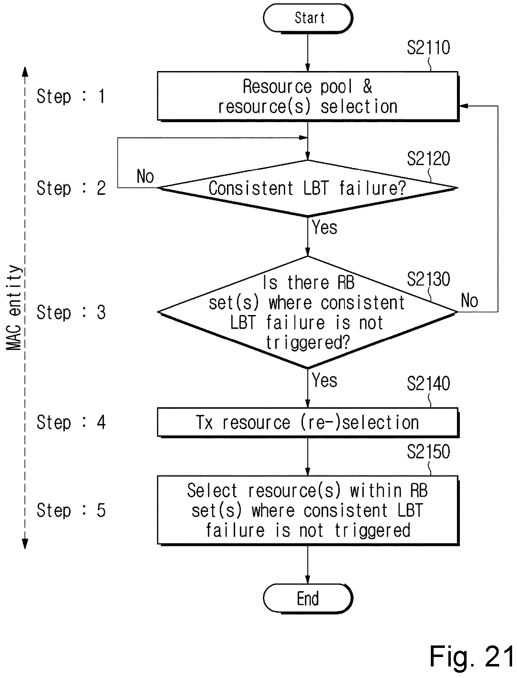

FIG. 21 illustrates a method of detecting consistent LBT failure on an RB set basis, applicable to the present disclosure. Referring to FIG. 21, the MAC layer of the UE that operates in a mode 2 in which the UE directly selects sidelink communication resources may determine to generate single/multiple MAC PDUs and may perform an operation based on this. The MAC layer of the UE may select a resource pool and may select a single resource for an initial transmission or retransmission opportunity (step 1, S2110). For example, the resource pool may include at least one RB set. Then, the MAC layer of the UE may verify whether consistent LBT failure is triggered in a specific RB set within the resource pool (step 2, S2120). If the consistent LBT failure is not triggered, the MAC layer of the UE may continuously verify whether the consistent LBT failure is triggered in the specific RB set. On the contrary, when the consistent LBT failure is triggered in the specific RB set, the MAC layer of the UE may verify whether there is a resource set in which the consistent LBT failure is not triggered (step 3, S2130). For example, when the RB set in which the consistent LBT failure is not triggered is absent in the specific RB set, the MAC layer of the UE may perform again the resource pool and resource selection procedure. On the contrary, when at least one RB set in which consistent LBT failure is not triggered is present in the specific RB set, the MAC layer of the UE may perform a Tx resource (re)selection operation (step 4, S2140). Since the RB set in which the consistent LBT failure is not triggered is present within the resource pool, the MAC layer of the UE may release one or more resources selected through the resource pool and resource selection procedure as step 1and may newly select at least one resource from the corresponding RB set. Then, the MAC layer of the UE may select resources within at least one RB set in which the consistent LBT failure is not triggered as newly selected at least one resource (step 5, S2150).

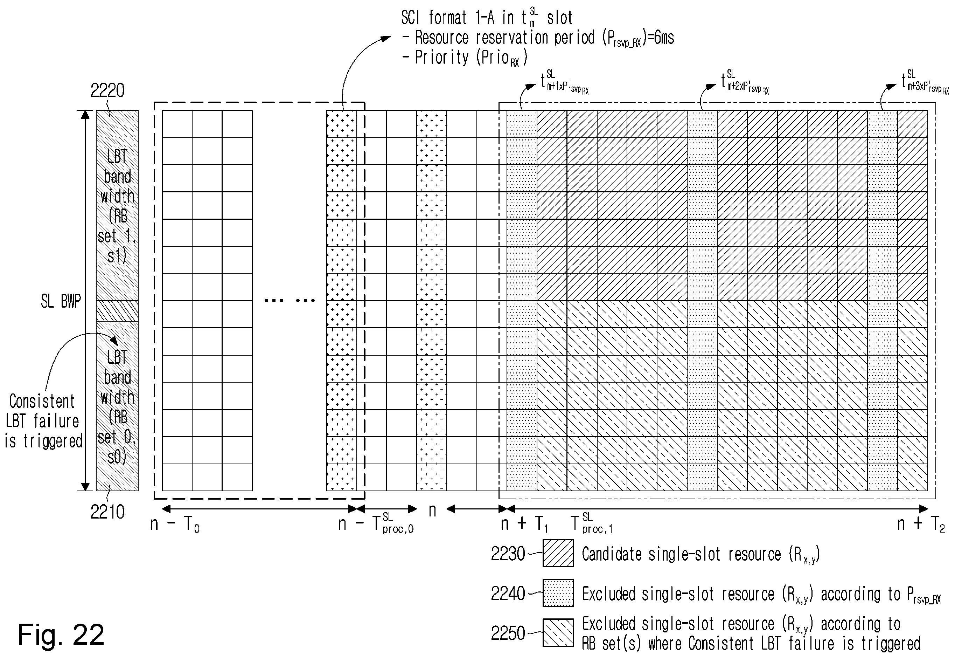

FIG. 22 illustrates a method of determining a candidate resource set based on consistent LBT failure, applicable to the present disclosure. Referring to FIG. 22, the physical layer of the UE may determine a candidate resource set by considering consistent LBT failure. For example, the physical layer of the UE may receive a request from a higher layer and may determine an available candidate resource set within a resource pool indicated based on the received request. Then, the physical layer of the UE may report the determined candidate resource set to the higher layer.

Here, when the consistent LBT failure is detected on the RB set basis, the corresponding RB set may not be used until the consistent LBT failure is recovered. Therefore, the physical layer of the UE needs to report information on a new candidate resource set to the higher layer. In detail, for example, the MAC layer of the UE may detect the consistent LBT failure from an RB set 0 2210 and then may request the physical layer of the UE for a resource set that may be determined for PSCCH/PSSCH transmission. For example, the MAC layer of the UE may deliver at least one RB set information in which consistent LBT failure is triggered to the physical layer of the UE. Then, the physical layer of the UE may perform the procedure of excluding reserved resources through another SCI within a selection window and may exclude resources in which the consistent LBT failure is triggered.

For example, in FIG. 22, the physical layer of the UE may determine a candidate resource set 2230 within n+$T_1$ to n+$T_2$. The candidate resource set 2230 may be determined as a resource excluding a resource 2240 excluded through SCI received within n+$T_1$ to n+$T_2$ and a resource 2250 within an RB set in which the consistent LBT failure is triggered. Here, n may be a point in time at which the MAC layer of the UE provides a parameter for requesting the candidate resource set, and the physical layer of the UE may ultimately determine the candidate resource set 2230 and may report the same to the MAC layer of the UE. When the MAC layer of the UE selects the selected grant resource, the MAC layer of the UE may select a resource within the candidate resource set 2230 reported by the physical layer without considering the consistent LBT failure.

As another example, a case in which the consistent LBT failure detection is performed on a resource pool basis may be considered. The MAC layer of the UE may select a plurality of resources divided into time and frequency based on single/multiple MAC PDUs and the number of HARQ retransmissions. Here, the MAC layer of the UE may continuously perform a Tx resource (re)selection check operation until resources of the selected resource pool are released by higher layer signaling or generation of an SL grant selected for multiple MAC PDUs is canceled. The Tx resource (re)selection check may be a procedure of determining whether to maintain the use and reservation of resources selected from the resource pool based on at least one of a case in which a PSCCH of the selected SL grant and a PSSCH of $2^{nd}$ SCK are not SL enabled time at a destination UE, a case in which a sidelink resource reselection counter (SL_RESOURCE_RESELECTION_COUNTER) becomes 0, a case in which resources of the resource pool is (re)configured by higher layer signaling, and a case in which more than a predetermined number of resources indicated by the selected SL grant are not continuously used. For example, all selected SL grants associated with a sidelink process are released if the aforementioned condition is met, and all the SL grant resources associated with the sidelink process may be released if Tx resources meet the condition. Then, the MAC layer of the UE may perform a procedure of performing Tx resource (re)selection and assigning a newly selected SL grant through new resource selection and reservation for the selected resource pool.

Also, for example, when consistent LBT failure is detected on a resource pool basis, the UE may perform an operation of switching from a frequency resource within an SL BWP to another resource pool that partially overlaps or does not completely overlap. In detail, for example, the MAC layer of the UE may select the resource pool, may generate single/multiple MAC PDU resources, may generate a selected SL grant, and may associate the same with a sidelink process. The UE may perform an LBT operation before performing transmission in the unlicensed band, and if LBT failure is consistently triggered, the consistent LBT failure may be triggered in the corresponding resource pool. The UE may determine that the UE may no longer maintain selected resources in the selected resource pool and may select a new resource pool. Therefore, the UE may select resources for single/multiple MAC PDUs, may generate a newly selected SL grant, and may associate the same with a sidelink process.

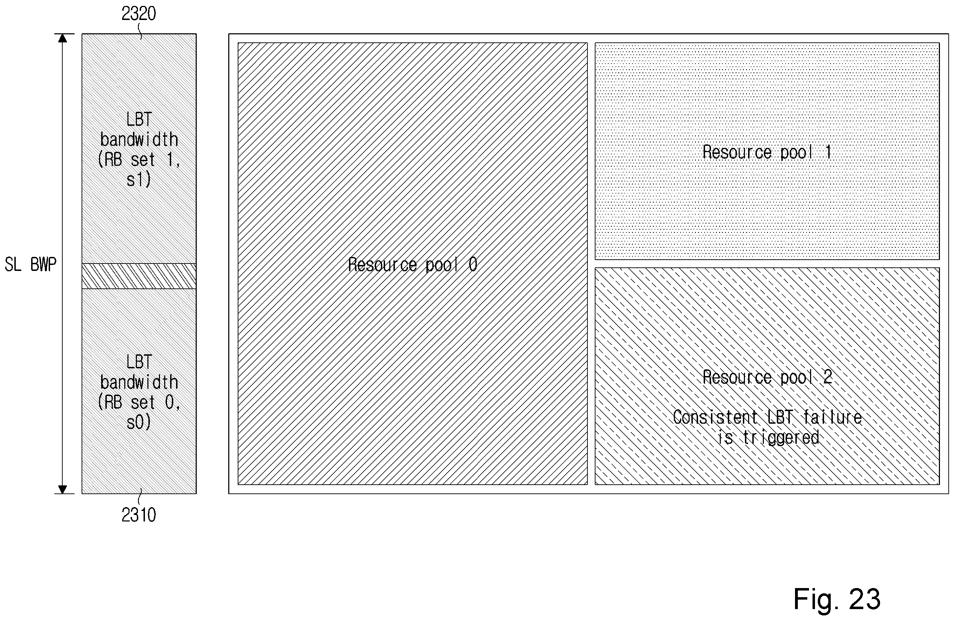

FIG. 23 illustrates a case in which consistent LBT failure is performed on a resource pool basis, applicable to the present disclosure. Referring to FIG. 23, the MAC layer of the UE may receive a candidate resource set from the physical layer of the UE. The MAC layer of the UE may select a resource pool 2 based on the candidate resource set, may select a resource for initial transmission or retransmission by considering single/multiple MAC PDUs in the selected resource pool 2, may generate a selected SL grant in the corresponding resource, and may associate the same with a sidelink process. Here, when consistent LBT failure is triggered in the resource pool 2, the UE may select either a resource pool 0 or a resource pool 1 that partially overlaps or completely does not overlap the resource pool 2 within an SL BWP. Then, the UE may deliver a candidate resource set for initial transmission or retransmission to the physical layer in consideration of the single/multiple MAC PDUs, may select a resource based on this, may generate the selected SL grant in the corresponding resource, and may associate the same with the sidelink process.

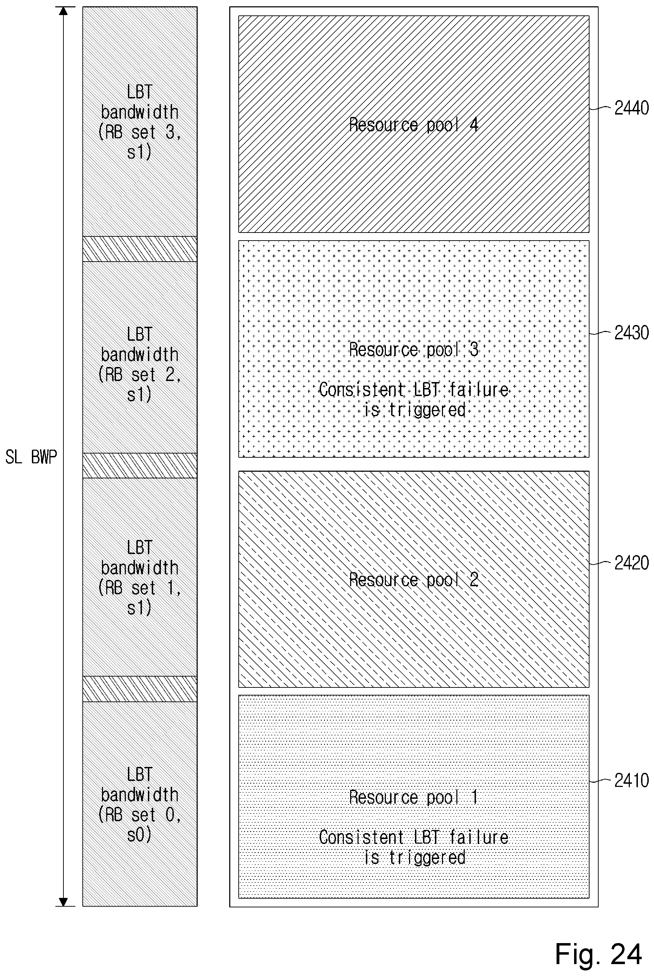

FIG. 24 illustrates a resource pool selection operation, applicable to the present disclosure. Referring to FIG. 24, the UE may need to select a resource pool in which consistent LBT failure is not triggered. For example, when the consistent LBT failure is detected on a resource pool basis, the consistent LBT failure may be detected from a resource pool 1 2410 and a resource pool 3 2430. However, it is only configuration for clarity of description and may not be limited thereto. Here, the MAC layer of the UE may select one of a resource pool 2 2420 and a resource pool 4 2440 in which the consistent LBT failure is not triggered.

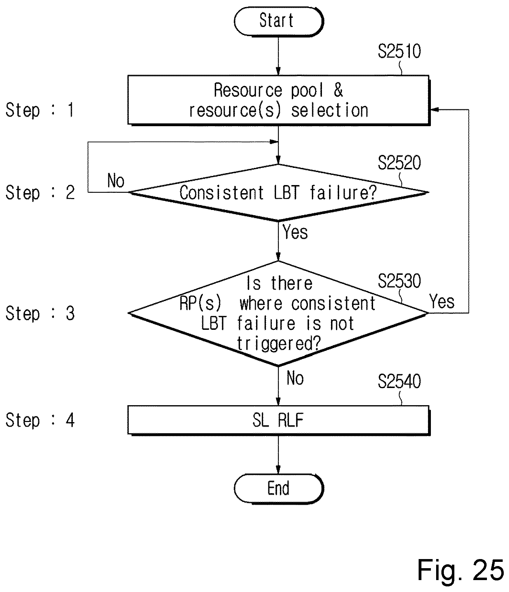

FIG. 25 illustrates a method of detecting consistent LBT failure on a resource pool basis, applicable to the present disclosure. Referring to FIG. 25, the MAC layer of the UE that operates in mode 2 in which the UE directly selects sidelink communication resources by the UE itself may determine to generate single/multiple MAC PDUs and may perform an operation based on this.

The MAC layer of the UE may select a resource pool and may select a single resource for an initial transmission or retransmission opportunity (step 1, S2510). For example, the MAC layer of the UE may select the resource pool in which consistent LBT failure is not triggered. In detail, for example, the MAC layer of the UE may select a specific resource pool depending on whether a PSFCH is configured in the resource pool in which the consistent LBT failure is not triggered, unlike selecting the resource pool depending on whether the PSFCH is configured in consideration of HARQ feedback enable/disable of data generated in LCH.

Then, the MAC layer of the UE may verify whether the consistent LBT failure is triggered in the selected resource pool (step 2, S2520). If the consistent LBT failure is not triggered, the MAC layer of the UE may continuously verify whether the consistent LBT failure is triggered in the selected resource pool. On the contrary, when the consistent LBT failure is triggered in the selected specific resource pool, the MAC layer of the UE may verify whether the resource pool in which the consistent LBT failure is not triggered is present within the SL BWP (step 3, S2530). For example, when at least one resource pool in which the consistent LBT failure is not triggered is present within the SL BWP, the MAC layer of the UE may proceed with the resource pool and resource selection procedure again. On the contrary, when the resource pool in which the consistent LBT failure is not triggered is absent within the SL BWP, the UE may disconnect PC5-RRC connection by generating an SL radio link failure (RLF) since there is no resource pool to select within the SL BWP (step 4, S2540).

As another example, a step 4 operation may be replaced with another operation. When the resource pool in which the consistent LBT failure is not triggered is absent within the SL BWP, the SL RLF may not be generated. In detail, for example, in a case in which a carrier aggregation operation is enabled in the UE, if there is no resource pool in which the consistent LBT failure is not triggered within the SL BWP in a specific carrier, the UE may report the consistent LBT failure triggered in the specific carrier to the other carrier and may differently configure the SL BWP of the specific carrier.

For example, as described above, consistent LBT failure detection may be performed on an RB set basis or a resource pool basis. Here, the UE may perform consistent LBT failure reporting for consistent LBT failure recovery. In detail, for example, a mode 1 UE controlled by a base station may transmit an SL LBT failure MAC CE to the base station. Also, when a mode 2 UE in which the UE controls sidelink communication performs communication based on SL carrier aggregation, the UE may transmit the SL LBT failure MAC CE through enabled another SL carrier.

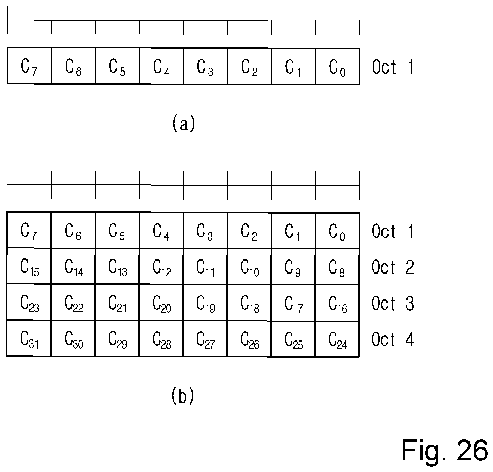

FIG. 26 illustrates an SL LBT failure MAC CE, applicable to the present disclosure. Referring to (a) of FIG. 26, a MAC CE fixed to a single octet may include eight C-fields. Here, $C_i$ may be set based on a unit that detects consistent LBT failure. In detail, for example, when the consistent LBT failure is detected on an RB set basis, $C_i$ may be indicated by an RB set index and based on this, presence or absence of consistent LBT failure may be indicated. For example, if eight RB sets are included in the SL BWP and the consistent LBT failure is triggered in RB set 1, RB set 3, and RB set 5, that is, if eight RB sets are included and the consistent LBT failure is triggered in RB sets 1, 3, and 5, $C_1$, $C_3$ and $C_5$ fields may be set to 1 and remaining C-fields may be set to 0.

As another example, when the consistent LBT failure is detected on a resource pool basis, $C_i$ may be indicated by a resource pool index and based on this, presence or absence of the consistent LBT failure may be indicated. In detail, for example, when five resource pools are configured within the SL BWP, and the consistent LBT failure is triggered in resource pool 0 and resource pool 1, $C_0$ and $C_1$ fields may be set to 1 and remaining C-fields may be set to 0.

As another example, referring to (b) of FIG. 26, the MAC CE may be in a fixed form that includes four octets, and 32 C-fields may be included. Therefore, the MAC CE may be used when the number of RB sets or the number of resource pools is configured to be more than 8. For example, SL carrier aggregation may use a plurality of SL carriers and, based on this, the number of RB sets or resource pools used may increase. Considering the above, the MAC CE may be configured with four octets, but may not be limited to a corresponding embodiment.

For example, an index of C-field may be configured per RB set or resource pool by higher layer. In detail, for example, as a case of detecting consistent LBT failure on an RB set basis, a case in which the SL BWP includes four RB sets is enabled in SL carrier 1 and SL carrier 2 may be considered. However, it is only an example for clarity of description and is not limited thereto. Here, four RB sets of SL carrier 1 may correspond to C-field indexes $C_0$ to $C_3$. Also, in SL carrier 2, four RB sets may correspond to C-field indexes $C_4$ to $C_7$.

As another example, as a case of detecting consistent LBT failure on a resource pool basis, a case in which the SL BWP that includes four resource pools is enabled in SL carrier 1 and SL carrier 2 may be considered. Here, four resource pools of SL carrier 1 may correspond to C-field indexes $C_0$ to $C_3$. Also, in SL carrier 2, four resource pools may correspond to C-field indexes $C_4$ to $C_7$.

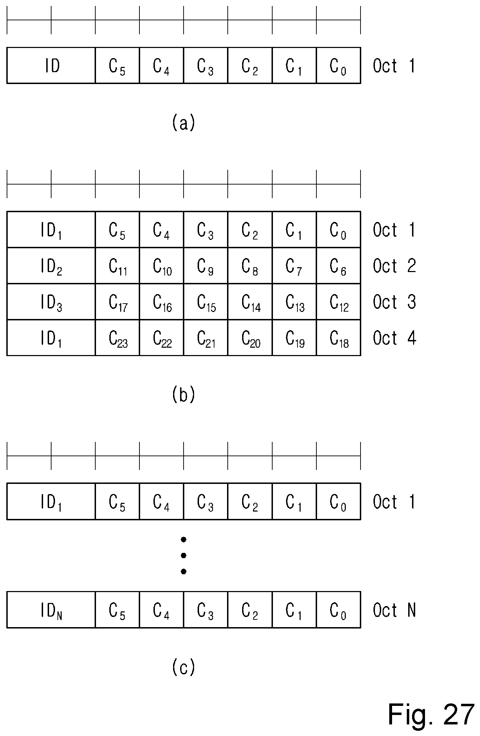

FIG. 27 illustrates an SL LBT failure MAC CE considering an SL carrier aggregation, applicable to the present disclosure. Referring to FIG. 27, different from FIG. 26, 2 bits of ID and 6 bits of C-fields may be included for each octet within a MAC CE. Here, the ID may be an SL BWP ID or an SL carrier ID, but is not limited thereto. In detail, for example, in the case of performing carrier aggregation through two SL carriers, the number of enabled carriers or SL BWPs may be two. Therefore, ID may be indicated by one bit to distinguish two SL carriers or SL BWPs. As another example, in the case of performing carrier aggregation through four SL carriers, the number of enabled carriers or SL BWPs may be four. Therefore, ID may be indicated by 2 bits to distinguish four SL carriers or SL BWPs.

For example, ID present before C field within 1 octet may be used to identify an RB set or a resource pool and to perform consistent LBT failure reporting. In detail, for example, referring to (a) of FIG. 27, the MAC CE may be fixed to 1 octet. As another example, referring to (b) of FIG. 27, the MAC CE may be fixed to 4 octets. As another example, referring to (c) of FIG. 27, the MAC CE may be variably configured based on the number (N) of SL carriers or SL BWPs to be distinguished, and is not limited to a specific form.

Also, for example, although the ID is described above as the SL carrier ID or the SL BWP ID, it is not limited thereto and may be an ID to distinguish a plurality of SL carriers. As another example, although the ID includes 2 bits, the ID may include more bits without being limited thereto. For example, in the case of distinguishing a plurality of SL carriers or SL BWPs, the number of ID bits may increase. As another example, the number of C-fields may not be limited to six within 1 octet and may be configured to be more, and is not limited to a specific form.

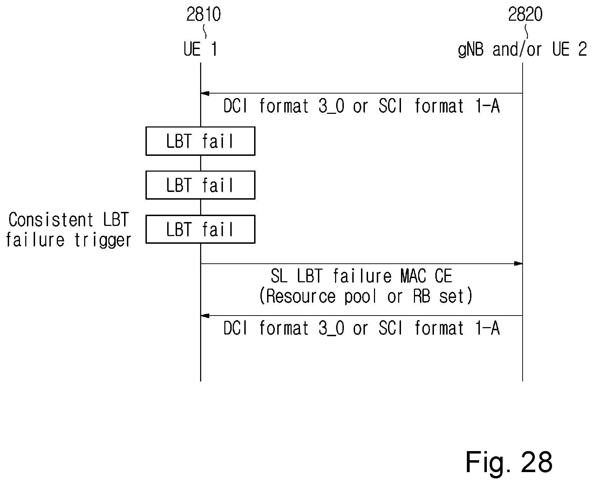

FIG. 28 illustrates an SL LBT failure MAC CE reporting operation, to which the present disclosure may apply. Referring to FIG. 28, a UE 1 2810 may receive scheduling through downlink control information (DCI) format 3_0 from a base station 2820. As another example, the UE 1 2810 may receive scheduling through sidelink control information (SCI) format 1-A from the UE 2 2820. In detail, for example, when the UE 1 2810 operates in mode 1 in which sidelink communication is controlled by the base station 2820, the UE 1 2810 may receive DCI format 3_0 to receive PSCCH/PSSCH scheduling. Here, the UE 1 2810 may perform an LBT operation before performing transmission based on the unlicensed band. Referring to FIG. 28, when LBT failure reaches a preset threshold before the UE 1 2810 transmits scheduled resources, the UE 1 2810 may trigger sidelink (SL) consistent LBT failure. For example, as described above, an SL consistent LBT failure detection unit may be an RB set or a resource pool. The UE 1 2810 may report the consistent LBT failure to the base station 2820 based on the LBT failure detection unit. Here, a resource pool or PSCCH/PSSCH resources indicated in DCI format 3_0 that the UE newly receives may not include resources within a resource pool or an RB set reported through the SL LBT failure MAC CE.

As another example, when the UE 2 2820 operates in mode 2 that controls sidelink communication, the UE 1 2810 may receive SCI format 1-A from the UE 2 2820 that is a Tx UE and, based on this, may receive scheduling of the PSSCH and 2nd SCI. For example, when HARQ feedback is enabled, the UE 1 2810 that is an Rx UE may need to perform an LBT procedure before transmitting the PSFCH. Here, when LBT failure reaches a predetermined threshold, the UE 1 2810 may trigger the SL consistent LBT failure. For example, as described above, the SL consistent LBT failure detection unit may be an RB set or a resource pool. The UE 1 2810 may report the consistent LBT failure to the UE 2 2820 through the SL LBT failure MAC CE based on the LBT failure detection unit. Then, the UE 2 2820 may transmit SCI format 1-A without selecting resources within the RB set or the resource pool reported from the UE 1 2810.

As another example, when the UE 1 2810 operates in mode 2 that controls sidelink communication, the UE 1 2810 may become a Tx UE and may perform scheduling of the PSSCH and 2nd SCI to the UE 2 2820 through SCI format 1-A. As another example, the UE 1 2810 may perform an LBT procedure before performing SL transmission (e.g., S-SSB, SCI) and may detect LBT failure. Here, when the LBT failure reaches a predetermined threshold, the UE 1 2810 may trigger the SL consistent LBT failure. For example, as described above, the SL consistent LBT failure detection unit may be an RB set or a resource pool. The UE 1 2810 may report the consistent LBT failure to the UE 2 2820 through the SL LBT failure MAC CE based on the LBT failure detection unit. Then, the UE 2 2820 may transmit SCI format 1-A without selecting resources within the RB set or the resource pool reported from the UE 1 2810. Also, the UE 2 2820 may recognize that SCI format 1-A transmission from the UE 1 2810 is not performed in resources within the RB set or the resource pool reported through the SL LBT failure MAC CE, and may not monitor the PSCCH within the corresponding resource pool.

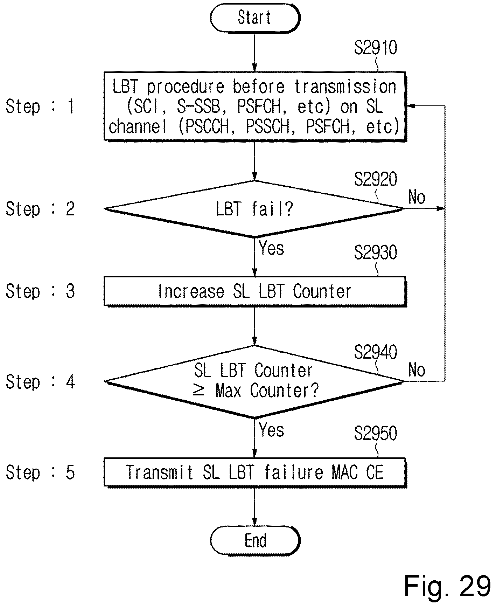

FIG. 29 illustrates a method of transmitting an SL LBT failure MAC CE, applicable to the present disclosure. Referring to FIG. 29, the UE may perform LBT before performing SL transmission (step 1, S2910). For example, the UE may perform LBT by considering an unlicensed band before performing SL transmission that schedules by the base station or schedules time and frequency resources by the UE itself. Here, in a case in which LBT fails (step 2, S2920), if an energy level received at a specific time interval is lower than a threshold, the UE may determine that LBT is successful and may initialize an SL LBT counter to 0. On the contrary, if the energy level received at the specific time interval is higher than or equal to the threshold, the UE may determine that LBT is failure and may increase the SL LBT counter (S2930). Here, for example, the MAC layer of the UE may increase the SL LBT counter by each one based on LBT failure. If the maximum counter value is reached based on the increase in the SL LBT counter (step 4, S2940), SL consistent LBT failure may be triggered. For example, if the SL LBT counter becomes greater than the maximum counter as the set threshold, the UE may generate the SL consistent LBT failure and may transmit an SL LBT failure MAC CE (step 5, S2950). For example, due to SL consistent LBT failure detected on the RB set basis or the resource pool basis, the UE may transmit an SL LBT failure MAC CE to the base station or another UE. For example, when the Tx UE operates in mode 1, the UE may transmit the SL LBT failure MAC CE to the base station and at least one Rx UE. On the other hand, when the Tx UE operates in mode 2, the UE may transmit the SL LBT failure MAC CE to at least one Rx UE. On the contrary, if the SL LBT counter is less than the maximum counter as the set threshold, the UE may perform the step 1 procedure of performing LBT for another SL transmission.

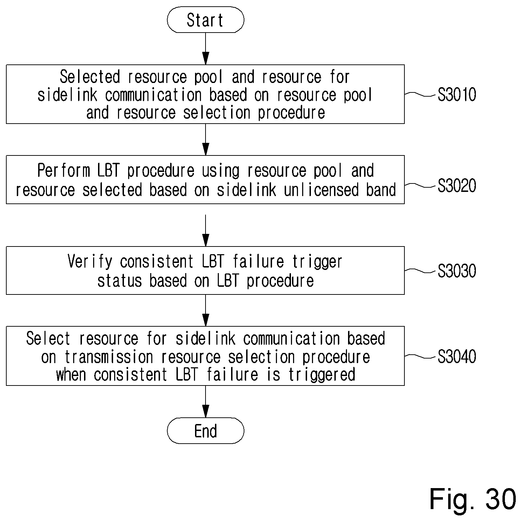

FIG. 30 is a flowchart illustrating a method of performing sidelink communication based on consistent LBT failure, applied to the present disclosure. A wireless UE may select a resource pool and a resource for sidelink communication based on a resource pool and resource selection procedure (S3010). Then, the wireless UE may perform an LBT procedure using the resource pool and the resource selected based on the sidelink unlicensed band (S3020), and may verify a consistent LBT failure trigger status based on the LBT procedure (S3030). When the consistent LBT failure is triggered, the wireless UE may select the resource for the sidelink communication based on a transmission resource selection procedure (S3040). Here, the consistent LBT failure trigger status may be verified per RB set, and the resource pool may include a plurality of RB sets. For example, when the consistent LBT failure is triggered in a first RB set among the plurality of RB sets included in the resource pool, and the consistent LBT failure is not triggered in a second RB set among the plurality of RB sets included in the resource pool, the wireless UE may perform the resource selection procedure in the second RB set and may select the resource for the sidelink communication.

As another example, when the consistent LBT failure is triggered in the first RB set and the consistent LBT failure is not triggered in the second RB set, a MAC layer of the wireless UE may release a sidelink grant selected based on the resource selection procedure and may select the resource for the sidelink communication included in the second RB set.

As another example, when the consistent LBT failure is triggered in the first RB set and the consistent LBT failure is not triggered in the second RB set, the MAC layer of the wireless UE may deliver consistent LBT failure information to a physical layer of the wireless UE. The physical layer of the wireless UE may determine a candidate resource set based on the consistent LBT failure information and may deliver the same to the MAC layer of the wireless UE. As described above, the MAC layer of the wireless UE may select at least one resource in the candidate resource set as the resource for the sidelink communication.

As another example, the consistent LBT failure trigger status may be verified per resource pool, and a single sidelink bandwidth part (SL BWP) may include a plurality of resource pools. For example, when the consistent LBT failure is triggered in a first resource pool among the plurality of resource pools included in the SL BWP and the consistent LBT failure is not triggered in a second resource pool among the plurality of resource pools included in the SL BWP, the wireless UE may select the second resource pool based on the resource pool and resource selection procedure, and may perform a resource selection procedure in the second resource pool and select the resource for the sidelink communication. As another example, when the consistent LBT failure is triggered in all of the plurality of resource pools included in the SL BWP, the wireless UE may release connection with another wireless UE based on SL RLF.

As another example, consistent LBT failure reporting may be performed through an SL LBT failure MAC CE, and each C field of the SL LBT failure MAC CE may be configured based on a consistent LBT failure reporting unit.

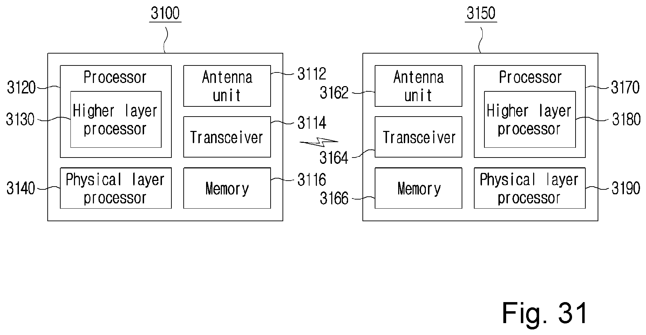

FIG. 31 is a diagram illustrating a base station device and a terminal device to which the present disclosure may apply.

A base station device 3100 may include a processor 3120, an antenna unit 3112, a transceiver 3114, and a memory 3116.

A processor 3120 performs a baseband-related signal processing and may include a higher layer processor 3130 and a physical layer processor 3140. The higher layer processor 3130 may process the operation of a medium access control (MAC) layer, a radio resource control (RRC) layer, or a higher layer thereof. The physical layer processor 3140 may process the operation of the physical (PHY) layer (e.g., uplink received signal processing, downlink transmission signal processing). In addition to performing baseband-related signal processing, the processor 3120 may also control the operation of the base station device 3100.

The antenna unit 3112 may include one or more physical antennas, and may support the multiple input multiple output (MIMO) transmission and reception in the case of including a plurality of antennas. Also, beamforming may be supported.

The memory 3116 may store computationally processed information of the processor 3120, software, operating systems, applications, and the like related to the operation of the base station device 3100, and may include components such as buffers.

The processor 3120 of the base station 3100 may be configured to implement the operation of the base station in the example described herein.

A terminal device 3150 may include a processor 3170, an antenna unit 3162, a transceiver 3164, and a memory 3166. For example, herein, the terminal device 3150 may perform communication with the base station device 3100. As another example, herein, the terminal device 3150 may perform SL communication with another terminal device. That is, the terminal device 3150 used herein refers to a device capable of communicating with at least one of the base station device 3100 and the other terminal devices and is not limited to communication with a specific device.

The processor 3170 performs baseband-related signal processing and may include a higher layer processor 3180 and a physical layer processor 3190. The higher layer processor 3180 may process the operation of the MAC layer, the RRC layer, or the higher layer. The physical layer processor 3190 may process the operations of the PHY layer (e.g., downlink received signal processing, uplink transmission signal processing). Also, in addition to performing baseband-related signal processing, the processor 3170 may also control the operation of the terminal device 3150.

The antenna unit 3162 may include one or more physical antennas, and may support MIMO transmission and reception in the case of including a plurality of antennas. Also, beamforming may be supported.

The memory 3166 may store computationally processed information of the processor 3170, software, operating systems, applications, and the like related to the operation of the base station device 3100, and may include components such as buffers.

The terminal device 3150 according to an example of the present disclosure may be associated with a vehicle. For example, the terminal device 3150 may be integrated in the vehicle, may be located in the vehicle, or may be located on the vehicle. Also, the terminal device 3150 according to the present disclosure may be the vehicle itself. Also, the terminal device 3150 according to the present disclosure may be at least one of a wearable terminal, AR/VR, an Internet of things (IoT) terminal, a robot terminal, and a public safety terminal. The terminal device 3150 to which the present disclosure may apply may include various types of communication devices that support an interactive service using sidelink for services, for example, Internet access, service execution, navigation, real-time information, autonomous driving, and safety-and-risk diagnosis. Also, the terminal device 3150 may include an AR/VR device capable of performing a sidelink operation or any type of communication devices capable of performing a relay operation as a sensor.

Here, the vehicle to which the present disclosure applies may include an autonomous vehicle, a semi-autonomous vehicle, and a non-autonomous vehicle. Meanwhile, although the terminal device 3150 according to an example of the present disclosure is described in association with the vehicle, at least one of the UEs may not be associated with the vehicle. It is provided as an example only and should not be interpreted to limit application of the present disclosure.

Also, the terminal device 3150 according to an example of the present disclosure may include various types of communication devices capable of performing cooperation that supports an interactive service using sidelink. That is, the terminal device 3150 may directly support the interactive service using the sidelink and may be employed as a cooperation device for supporting the interactive service using the sidelink.

Also, for example, the terminal device 3150 may select a resource pool and a resource for sidelink communication based on a resource pool and resource selection procedure. Then, the terminal device 3150 may perform an LBT procedure using the selected resource pool and the resource based on the sidelink unlicensed band, and may verify a consistent LBT failure trigger status based on the LBT procedure. When the consistent LBT failure is triggered, the terminal device 3150 may select the resource for the sidelink communication based on a transmission resource selection procedure. Here, the consistent LBT failure trigger status may be verified per RB set, and the resource pool may include a plurality of RB sets. For example, when the consistent LBT failure is triggered in a first RB set among the plurality of RB sets included in the resource pool, and the consistent LBT failure is not triggered in a second RB set among the plurality of RB sets included in the resource pool, the terminal device 3150 may perform the resource selection procedure in the second RB set and may select the resource for the sidelink communication.

As another example, when the consistent LBT failure is triggered in the first RB set and the consistent LBT failure is not triggered in the second RB set, a MAC layer of the terminal device 3150 may release a sidelink grant selected based on the resource selection procedure and may select the resource for the sidelink communication included in the second RB set.

As another example, when the consistent LBT failure is triggered in the first RB set and the consistent LBT failure is not triggered in the second RB set, the MAC layer of the terminal device 3150 may deliver consistent LBT failure information to a physical layer of the terminal device 3150. The physical layer of the terminal device 315 may determine a candidate resource set based on the consistent LBT failure information and may deliver the same to the MAC layer of the terminal device 3150. As described above, the MAC layer of the terminal device 3150 may select at least one resource in the candidate resource set as the resource for the sidelink communication.

As another example, the consistent LBT failure trigger status may be verified per resource pool, and a single sidelink bandwidth part (SL BWP) may include a plurality of resource pools. For example, when the consistent LBT failure is triggered in a first resource pool among the plurality of resource pools included in the SL BWP and the consistent LBT failure is not triggered in a second resource pool among the plurality of resource pools included in the SL BWP, the terminal device 3150 may select the second resource pool based on the resource pool and resource selection procedure, and may perform a resource selection procedure in the second resource pool and select the resource for the sidelink communication. As another example, when the consistent LBT failure is triggered in all of the plurality of resource pools included in the SL BWP, the terminal device 3150 may release connection with another wireless UE based on SL RLF.

As another example, consistent LBT failure reporting may be performed through an SL LBT failure medium access control (MAC) control element (CE), and each C field of the SL LBT failure MAC CE may be configured based on a consistent LBT failure reporting unit.

Also, various embodiments of the present disclosure may be implemented by hardware, firmware, software, or combination thereof. In the case of implementation by hardware, the embodiments may be implemented by one or more application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine executable instructions (e.g., operating system, application, firmware, program, etc.) for enabling to implement operations according to the methods of the various embodiments, and a device or a non-transitory computer-readable medium executable on a computer storing such a software or instructions.

Various embodiments of the present disclosure are to explain representative aspect of the present disclosure rather than listing all possible combinations and description made in the various embodiments may be independently applied or may be applied in combination of two or more.

INDUSTRIAL APPLICABILITY

The above matters may apply to other systems.

**Claims**

1. A wireless user equipment (UE) that performs a listen before talk (LBT) operation in a sidelink unlicensed band in a wireless communication system, the wireless UE comprising:

   at least one antenna configured to transmit and receive one or more wireless signals;
   at least one processor; and
   a memory configured to store instructions for the wireless UE when executed by the at least one processor, wherein the wireless UE is configured to,
   select a resource pool and a resource for sidelink communication based on a resource pool and resource selection procedure,
   perform a listen before talk (LBT) procedure using the resource pool and the resource selected based on the sidelink unlicensed band,
   verify a consistent LBT failure trigger status based on the LBT procedure, and
   select the resource for the sidelink communication based on a transmission resource selection procedure when the consistent LBT failure is triggered.

2. The wireless UE of claim 1, wherein

the consistent LBT failure trigger status is verified per resource block (RB) set,
the resource pool includes a plurality of RB sets, and
when the consistent LBT failure is triggered in a first RB set among the plurality of RB sets included in the resource pool and the consistent LBT failure is not triggered in a second RB set among the plurality of RB sets included in the resource pool, the wireless UE performs the resource selection procedure in the second RB set and selects the resource for the sidelink communication.

3. The wireless UE of claim 2, wherein, when the consistent LBT failure is triggered in the first RB set and the consistent LBT failure is not triggered in the second RB set, a medium access control (MAC) layer of the wireless UE releases a sidelink grant selected based on the resource selection procedure and selects the resource for the sidelink communication included in the second RB set.

4. The wireless UE of claim 2, wherein, when the consistent LBT failure is triggered in the first RB set and the consistent LBT failure is not triggered in the second RB set, a MAC layer of the wireless UE delivers consistent LBT failure information to a physical layer of the wireless UE, the physical layer of the wireless UE determines a candidate resource set based on the consistent LBT failure information and delivers the same to the MAC layer of the wireless UE, and the MAC layer of the wireless UE selects at least one resource in the candidate resource set as the resource for the sidelink communication.

5. The wireless UE of claim 1, wherein

the consistent LBT failure trigger status is verified per resource pool,
a single sidelink bandwidth part (SL BWP) includes a plurality of resource pools, and
when the consistent LBT failure is triggered in a first resource pool among the plurality of resource pools included in the SL BWP and the consistent LBT failure is not triggered in a second resource pool among the plurality of resource pools included in the SL BWP, the wireless UE selects the second resource pool based on the resource pool and resource selection procedure, and performs a resource selection procedure in the second resource pool and selects the resource for the sidelink communication.

6. The wireless UE of claim 5, wherein, when the consistent LBT failure is triggered in all of the plurality of resource pools included in the SL BWP, the wireless UE releases connection with another wireless UE based on sidelink radio link failure (SL RLF).

7. The wireless UE of claim 1, wherein consistent LBT failure reporting is performed through an SL LBT failure medium access control (MAC) control element (CE), and each C field of the SL LBT failure MAC CE is configured based on a consistent LBT failure reporting unit.

| Downlink frame $i$ |
|:---:|

| Uplink frame $i$ |
|:---:|

$N_{TA} T_s$

Fig. 1

Fig. 2

Fig. 3

C-V2X

| V2V | Reserved | Reserved | Tolling | Control | I2V | PVD/<br>Security |
|------|----------|----------|---------|---------|-----|------------------|
| CH 1 | CH 2 | CH 3 | CH 4 | CH 5 | CH 6 | CH 7 |

5,855    5,865    5,875    5,885    5,895    5,905    5,915    5,925 MHz

Fig. 4

Fig. 5

Fig. 6

| U-NII-1 (100 MHz) | U-NII-2A (100 MHz) | U-NII-2B (120 MHz) | U-NII-2C (255 MHz) | U-NII-3 (100 MHz) Part 15.247 Rules (125 MHz) | 25 MHz | U-NII-4 (75 MHz) |
|---|---|---|---|---|---|---|

5.150 GHz    5.250 GHz    5.350 GHz        5.470 GHz                    5.725 GHz        5.850 GHz    5.925 GHz

# Fig. 7

PSD limitation — — — | ⊓ | — — —     ⇒     — — — ⌐▭▭▭¬ — — —

← Bandwidth →          ← Bandwidth →

# Fig. 8

Carrier bandwidth

LBT bandwidth(RB set1,s1) — 911

913 — nrofCRB(0..15)

startCRB(0..274),$GB_{s0,x}^{start,\mu}$

Guardband

LBT bandwidth(RB set0,s0) — 912

$RB_{s1,uplink}^{end,\mu}$

$RB_{s1,uplink}^{start,\mu}$

$RB_{s0,uplink}^{end,\mu}$

$RB_{s0,uplink}^{start,\mu}$

$$RB_{s,x}^{start,\mu} = N_{grid,x}^{start,\mu} + \begin{cases} 0 & s = 0 \\ GB_{s-1,x}^{start,\mu} + GB_{s-1,x}^{size,\mu} & otherwise \end{cases}$$

$$RB_{s,x}^{end,\mu} = N_{grid,x}^{start,\mu} + \begin{cases} N_{grid,x}^{size,\mu} & s = N_{RB-set,x}-1 \\ GB_{s,x}^{start,\mu} & otherwise \end{cases}$$

$$N_{BWP,i}^{size,\mu} = RB_{s1,uplink}^{end,\mu} - RB_{s0,uplink}^{start,\mu}$$

$$N_{BWP,i}^{start,\mu} = RB_{s0,uplink}^{start,\mu}$$

923

922

BWP 3

BWP 2

BWP 1

921

Fig. 9

Fig. 10

Fig. 11

SCI format 2-A/2-B
• HARQ feedback enabled/disabled indicator = 1

sl-PSFCH-Period = sl2(sl0, sl1, sl2, sl4)

sl-MinTimeGapPSFCH = sl2(sl2, sl3)

1240   1250

1   2   3   4   5

1210   1220   1230   sl-drx-HARQ-RTT-Timer

timeResourcePool = INTEGER (10~160) = 10 [0 1 1 0 0 1 0 0 1 1]

SL Slot w/ PSFCH

SL Slot w/o PSFCH

Uu Slot

**Fig. 12**

1310   sl-drx-HARQ-RTT-Timer

**Fig. 13**

Fig. 14

Fig. 15

Fig. 16

Fig. 17

Fig. 18

Fig. 19

Candidate time/frequency resource($R_{x,y}$) in $S_A$

MAC entity randomly selects resource within the RB set(s) which is not triggered consistent LBT failure

SL BWP

2020

LBT band width (RB set 1, s1)

Consistent LBT failure is triggered

LBT band width (RB set 0, s0)

2010

(a) Sensing based resource selection

2040

LBT band width (RB set 1, s1)

LBT band width (RB set 0, s0)

2030

(b) Random based resource selection

Fig. 20

EP 4 615 139 A1

Fig. 21

Fig. 22

SCI format 1-A in $t_m^{SL}$ slot
- Resource reservation period ($P_{rsvp\_RX}$)=6ms
- Priority ($Prio_{RX}$)

$t_{m+1 \times P'_{rsvp_{RX}}}^{SL}$    $t_{m+2 \times P'_{rsvp_{RX}}}^{SL}$    $t_{m+3 \times P'_{rsvp_{RX}}}^{SL}$

2220

LBT band width (RB set 1, s1)

SL BWP

LBT band width (RB set 0, s0)

Consistent LBT failure is triggered

2210

$n - T_0$          $n - T_{proc,0}^{SL}$     $n$     $n + T_1$ $T_{proc,1}^{SL}$          $n + T_2$

2230 — Candidate single-slot resource ($R_{x,y}$)

2240 — Excluded single-slot resource ($R_{x,y}$) according to $P_{rsvp\_RX}$

2250 — Excluded single-slot resource ($R_{x,y}$) according to RB set(s) where Consistent LBT failure is triggered

EP 4 615 139 A1

EP 4 615 139 A1

2320

LBT
bandwidth
(RB set 1,
s1)

SL BWP

LBT
bandwidth
(RB set 0,
s0)

2310

Resource pool 0

Resource pool 1

Resource pool 2

Consistent LBT failure
is triggered

Fig. 23

Fig. 24

Start

Step : 1
Resource pool &
resource(s) selection
S2510

Step : 2
Consistent LBT failure?
S2520
No
Yes

Step : 3
Is there
RP(s) where consistent
LBT failure is not
triggered?
S2530
Yes
No

Step : 4
SL RLF
S2540

End

Fig. 25

| $C_7$ | $C_6$ | $C_5$ | $C_4$ | $C_3$ | $C_2$ | $C_1$ | $C_0$ | Oct 1 |

(a)

| $C_7$ | $C_6$ | $C_5$ | $C_4$ | $C_3$ | $C_2$ | $C_1$ | $C_0$ | Oct 1 |
| $C_{15}$ | $C_{14}$ | $C_{13}$ | $C_{12}$ | $C_{11}$ | $C_{10}$ | $C_9$ | $C_8$ | Oct 2 |
| $C_{23}$ | $C_{22}$ | $C_{21}$ | $C_{20}$ | $C_{19}$ | $C_{18}$ | $C_{17}$ | $C_{16}$ | Oct 3 |
| $C_{31}$ | $C_{30}$ | $C_{29}$ | $C_{28}$ | $C_{27}$ | $C_{26}$ | $C_{25}$ | $C_{24}$ | Oct 4 |

(b)

Fig. 26

| ID | $C_5$ | $C_4$ | $C_3$ | $C_2$ | $C_1$ | $C_0$ | Oct 1 |

(a)

| $ID_1$ | $C_5$ | $C_4$ | $C_3$ | $C_2$ | $C_1$ | $C_0$ | Oct 1 |
| $ID_2$ | $C_{11}$ | $C_{10}$ | $C_9$ | $C_8$ | $C_7$ | $C_6$ | Oct 2 |
| $ID_3$ | $C_{17}$ | $C_{16}$ | $C_{15}$ | $C_{14}$ | $C_{13}$ | $C_{12}$ | Oct 3 |
| $ID_1$ | $C_{23}$ | $C_{22}$ | $C_{21}$ | $C_{20}$ | $C_{19}$ | $C_{18}$ | Oct 4 |

(b)

| $ID_1$ | $C_5$ | $C_4$ | $C_3$ | $C_2$ | $C_1$ | $C_0$ | Oct 1 |

$\bullet$
$\bullet$
$\bullet$

| $ID_N$ | $C_5$ | $C_4$ | $C_3$ | $C_2$ | $C_1$ | $C_0$ | Oct N |

(c)

Fig. 27

2810  2820

UE 1  gNB and/or UE 2

DCI format 3_0 or SCI format 1-A

LBT fail

LBT fail

Consistent LBT
failure trigger    LBT fail

SL LBT failure MAC CE
(Resource pool or RB set)

DCI format 3_0 or SCI format 1-A

Fig. 28

```
                          ( Start )

                                              S2910
Step : 1      LBT procedure before transmission
              (SCI, S-SSB, PSFCH, etc) on SL
              channel (PSCCH, PSSCH, PSFCH, etc)

                                         S2920
                                                  No
Step : 2            LBT fail?

                         Yes        S2930

Step : 3         Increase SL LBT Counter

                                         S2940
                    SL LBT Counter             No
Step : 4          ≥ Max Counter?

                         Yes         S2950

Step : 5      Transmit SL LBT failure MAC CE

                          ( End )
```

Fig. 29

```
                        ( Start )
                            │
                            ▼
        ┌──────────────────────────────────────┐
        │     Selected resource pool and resource for     │
        │ sidelink communication based on resource pool   │──S3010
        │          and resource selection procedure       │
        └──────────────────────────────────────┘
                            │
                            ▼
        ┌──────────────────────────────────────┐
        │    Perform LBT procedure using resource pool and │
        │ resource selected based on sidelink unlicensed band │──S3020
        └──────────────────────────────────────┘
                            │
                            ▼
        ┌──────────────────────────────────────┐
        │       Verify consistent LBT failure trigger       │
        │           status based on LBT procedure           │──S3030
        └──────────────────────────────────────┘
                            │
                            ▼
        ┌──────────────────────────────────────┐
        │  Select resource for sidelink communication based │
        │    on transmission resource selection procedure   │──S3040
        │      when consistent LBT failure is triggered     │
        └──────────────────────────────────────┘
                            │
                            ▼
                         ( End )
```

Fig. 30

| 3120 | Processor | Antenna unit | 3112 |
| 3130 | Higher layer processor | | |
| 3140 | Physical layer processor | Transceiver | 3114 |
| | | Memory | 3116 |

3100

| 3162 | Antenna unit | Processor | 3170 |
| | Transceiver | Higher layer processor | 3180 |
| 3164 | | | |
| 3166 | Memory | Physical layer processor | 3190 |

3150

Fig. 31

## INTERNATIONAL SEARCH REPORT

International application No.

**PCT/KR2023/017467**

### A. CLASSIFICATION OF SUBJECT MATTER

**H04W 74/08**(2009.01)i; **H04W 24/08**(2009.01)i; **H04W 76/19**(2018.01)i; **H04W 92/18**(2009.01)i

According to International Patent Classification (IPC) or to both national classification and IPC

### B. FIELDS SEARCHED

Minimum documentation searched (classification system followed by classification symbols)

H04W 74/08(2009.01); H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 지속적인 엘비티 실패(consistent LBT failure), 자원 스위칭(resource switching), 사이드링크 엘비티(sidelink LBT)

### C. DOCUMENTS CONSIDERED TO BE RELEVANT

| Category* | Citation of document, with indication, where appropriate, of the relevant passages | Relevant to claim No. |
|---|---|---|
| Y | WO 2022-165851 A1 (LENOVO (BEIJING) LIMITED) 11 August 2022 (2022-08-11)<br>See paragraphs [0037], [0041]-[0044], [0047] and [0061]; and figure 2. | 1-7 |
| Y | LENOVO. Discussion on LBT impact to MAC for NR SL-U. R2-2209936, 3GPP TSG-RAN WG2 Meeting #119bis electronic. [Online]. 30 September 2022.<br>See section 2. | 1-7 |
| A | XIAOMI. Discussion on LBT for sidelink operation on unlicensed spectrum. R2-2210380, 3GPP TSG-RAN WG2 Meeting #119bis electronic. [Online]. 30 September 2022.<br>See sections 2-3. | 1-7 |
| A | WO 2022-086082 A1 (LG ELECTRONICS INC.) 28 April 2022 (2022-04-28)<br>See claims 1-8. | 1-7 |
| A | KR 10-2022-0117870 A (QUALCOMM INCORPORATED) 24 August 2022 (2022-08-24)<br>See claims 1-6. | 1-7 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 February 2024** | **14 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/017467**

| Patent document cited in search report | | | Publication date (day/month/year) | Patent family member(s) | | | Publication date (day/month/year) |
|---|---|---|---|---|---|---|---|
| WO | 2022-165851 | A1 | 11 August 2022 | CN | 116889075 | A | 13 October 2023 |
| WO | 2022-086082 | A1 | 28 April 2022 | EP | 4233455 | A1 | 30 August 2023 |
| | | | | KR | 10-2023-0092887 | A | 26 June 2023 |
| KR | 10-2022-0117870 | A | 24 August 2022 | BR | 112022011302 | A2 | 06 September 2022 |
| | | | | CN | 114788377 | A | 22 July 2022 |
| | | | | EP | 4079065 | A1 | 26 October 2022 |
| | | | | TW | 202127951 | A | 16 July 2021 |
| | | | | US | 11576211 | B2 | 07 February 2023 |
| | | | | US | 2021-0195649 | A1 | 24 June 2021 |
| | | | | WO | 2021-126402 | A1 | 24 June 2021 |

Form PCT/ISA/210 (patent family annex) (July 2022)